(19) Europäisches Patentamt / European Patent Office / Office européen des brevets

(11) **EP 3 637 875 B1**

(12) **EUROPEAN PATENT SPECIFICATION**

(45) Date of publication and mention of the grant of the patent:
**20.07.2022 Bulletin 2022/29**

(21) Application number: **18794209.9**

(22) Date of filing: **04.05.2018**

(51) International Patent Classification (IPC):
**H04W 52/14** (2009.01)     **H04W 52/00** (2009.01)
**H04W 52/28** (2009.01)     **H04W 52/38** (2009.01)
**H04W 52/34** (2009.01)

(52) Cooperative Patent Classification (CPC):
**H04W 52/38; H04W 52/146; H04W 52/281; H04W 52/34**

(86) International application number:
**PCT/CN2018/085718**

(87) International publication number:
**WO 2018/202169 (08.11.2018 Gazette 2018/45)**

(54) **POWER CONTROL METHOD AND DEVICE**

LEISTUNGSSTEUERUNGSVERFAHREN UND -VORRICHTUNG

PROCÉDÉ ET DISPOSITIF DE RÉGULATION DE PUISSANCE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.05.2017 CN 201710317493**

(43) Date of publication of application:
**15.04.2020 Bulletin 2020/16**

(73) Proprietor: **Huawei Technologies Co., Ltd.
Longgang District
Shenzhen, Guangdong 518129 (CN)**

(72) Inventors:
 • **MAO, Qiqi
  Shenzhen
  Guangdong 518129 (CN)**
 • **LIU, Fengwei
  Shenzhen
  Guangdong 518129 (CN)**
 • **TANG, Xiaoyong
  Shenzhen
  Guangdong 518129 (CN)**

(74) Representative: **Thun, Clemens
  Mitscherlich PartmbB
  Patent- und Rechtsanwälte
  Sonnenstraße 33
  80331 München (DE)**

(56) References cited:
  CN-A- 101 110 635      CN-A- 101 175 039
  CN-A- 101 404 528      US-A1- 2015 327 182
  US-A1- 2016 323 887

• **INTERDIGITAL COMMUNICATIONS: "Power Control for NR", 3GPP DRAFT; R1-1705437, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, Washington, USA; 20170403 - 20170407 2 April 2017 (2017-04-02), XP051243567, Retrieved from the Internet: URL:http://www.3gpp.org/ftp/Meetings_3GPP_ SYNC/RAN1/Docs/ [retrieved on 2017-04-02]**
• **NOKIA ET AL: "UL Power Control for MIMO", 3GPP DRAFT; R1-1705978, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, WA, USA; 20170403 - 20170407 2 April 2017 (2017-04-02), XP051244087, Retrieved from the Internet: URL:http://www.3gpp.org/ftp/Meetings_3GPP_ SYNC/RAN1/Docs/ [retrieved on 2017-04-02]**

- SAMSUNG: "UL power control aspects", 3GPP DRAFT; R1-1612518 UL POWER CONTROL ASPECTS-SAMSUNG, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Reno, USA; 20161114 - 20161118 13 November 2016 (2016-11-13), XP051176465, Retrieved from the Internet: URL:http://www.3gpp.org/ftp/Meetings_3GPP_ SYNC/RAN1/Docs/ [retrieved on 2016-11-13]
- INTEL CORPORATION: "eMBB/URLLC multiplexing for UL", 3GPP DRAFT; R1-1704764 INTEL - URLLC_EMBB_MUX_UL, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Spokane, USA; 20170403 - 20170407 2 April 2017 (2017-04-02), XP051242901, Retrieved from the Internet: URL:http://www.3gpp.org/ftp/Meetings_3GPP_ SYNC/RAN1/Docs/ [retrieved on 2017-04-02]
- SAMSUNG: "RI-1717694: On PHR Requirements and Calculation", 3GPP TSG RAN WG1 meeting 90bis, 13 October 2017 (2017-10-13), XP051340879,
- SAMSUNG: "RI-1710766: On PHR Requirements and Calculation", 3GPP TSG RAN WG1 NR Ad-Hoc Meeting, 30 June 2017 (2017-06-30), XP051299971,
- SAMSUNG: "RI-1720363: On PHR Requirements and Calculation", GPP TSG RAN WG1 meeting 91, 30 June 2017 (2017-06-30), pages 1-3, XP051369936,
- SAMSUNG: "RI-1705410: PHR for eMBB/URLLC multiplexing", 3GPP TSG RAN WG1 Meeting #88bis, 7 April 2017 (2017-04-07), pages 1-2, XP051243540,
- "3 Generation Partnership Project; Technical Specification Group Radio Access Network; Evolved Universal Terrestrial Radio Access (E-UTRA); Physical layer procedures (Release 14)", 3GPP STANDARD ; TECHNICAL SPECIFICATION ; 3GPP TS 36.213, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V14.2.0, 23 March 2017 (2017-03-23), pages 8-49, XP051291434, [retrieved on 2017-03-23]

**Description**

**TECHNICAL FIELD**

Embodiments of this application relate to the field of communications technologies, and in particular, to a power control method and an apparatus.

**BACKGROUND**

In a long term evolution (long term evolution, LTE) system, transmit power of a physical uplink shared channel (physical uplink shared channel, PUSCH) needs to meet a requirement of a signal to interference plus noise ratio (signal to interference plus noise ratio, SINR) required when data transmission on the PUSCH reaches a bit error rate of 10% under different modulation and coding scheme (modulation and coding scheme, MCS) conditions. Therefore, a base station controls the transmit power of the PUSCH based on settings of this requirement. However, this cannot adapt to new radio (new radio, NR) development.

Further, prior art document Interdigital Communications, 3GPP Draft; R1-1705437, Spokane, Washington, USA, April 2, 2017 refers to a power control for NR.

**SUMMARY**

This application provides a power control method and an apparatus, which may be applied to an NR system. This problem is solved by the subject matter of the independent claims. Further implementation forms are provided in the dependent claims.

According to a first aspect, this application provides a power control method and apparatus.

In a possible design, the method may include: determining, by a network device, an uplink channel power control parameter of UE, where different uplink channel power control parameters of the UE are used for transmitting different types of data; and then sending, by the network device, information indicating the determined uplink channel power control parameter. In this way, the different types of data have different uplink channel transmit power, so as to meet performance requirements of the different types of data. Therefore, the method can be applied to an NR system.

In a possible design, the different types of data include at least one of data with different service types, data for which different subcarrier spacings are used, and data for which different waveforms are used. A manner for distinguishing between the different types of data is not limited in this application. A manner listed in this possible design is merely an example, and is not limited during specific implementation. For example, any priori-art manner may be used to distinguish between the different types of data.

In a possible design, the uplink channel power control parameter includes a first-type power control parameter, and the first-type power control parameter includes at least one of a cell reference open-loop power transmission parameter, a path loss compensation parameter, a user open-loop power offset parameter, a modulation and coding scheme MCS-based power adjustment parameter, and a parameter indicating whether a transmit power control TPC accumulation form is used. In this possible design, an implementation of the uplink channel power control parameter is provided.

In a possible design, the uplink channel power control parameter includes a first-type power control parameter based on at least two types of data.

In a possible design, the uplink channel power control parameter includes a first-type power control parameter based on a reference type of data. Optionally, the uplink channel power control parameter further includes a compensation value based on at least one type of data.

In a possible design, the different types of data include the data for which the different subcarrier spacings are used; and the method may further include: sending, by the network device to the UE, information indicating a reference subcarrier spacing. In this possible design, a manner for obtaining, by the UE, the information about the reference subcarrier spacing is provided. During specific implementation, the network device and the UE may preset or predefine the reference subcarrier spacing according to a protocol.

In a possible design, the sending information for the determined uplink channel power control parameter may include: sending the information for the determined uplink channel power control parameter by using RRC signaling, MAC signaling, DCI, or the like.

In a possible design, the uplink channel power control parameter includes a transmit power control value. Optionally, the uplink power control parameter includes a transmit power control value based on at least two types of data.

Correspondingly, this application further provides a power control apparatus, and the apparatus may implement the power control method according to the first aspect. For example, the apparatus may be a network device, and the network device may implement the foregoing method by using software or hardware or by using hardware by executing corresponding software.

In a possible design, the apparatus may include a processor and a memory. The processor is configured to support the apparatus in performing corresponding functions in the method according to the first aspect. The memory is configured to be coupled to the processor, and the memory stores a program instruction and data that are necessary for the apparatus. In addition, the apparatus may further include a communications interface, configured to support communication between the apparatus and another network element. The communications interface may be a transceiver.

In a possible design, the apparatus may include a determining unit and a sending unit. The determining unit is configured to determine an uplink channel power control parameter of UE, where different uplink channel power control parameters of the UE are used for transmitting different types of data. The sending unit is configured to send information indicating the determined uplink channel power control parameter.

According to a second aspect, this application provides another power control method and apparatus.

In a possible design, the method may include: receiving, by UE, information indicating an uplink channel power control parameter of the UE, where different uplink channel power control parameters of the UE are used for transmitting different types of data; and then determining, by the UE, uplink channel transmit power of the UE based on the indicated uplink channel power control parameter. For beneficial effects that can be achieved by the method, refer to the first aspect. Details are not described herein again.

In a possible design, the different types of data include at least one of data with different service types, data for which different subcarrier spacings are used, and data for which different waveforms are used.

In a possible design, the uplink channel power control parameter includes a first-type power control parameter, and the first-type power control parameter includes at least one of a cell reference open-loop power transmission parameter, a path loss compensation parameter, a user open-loop power offset parameter, a modulation and coding scheme MCS-based power adjustment parameter, and a parameter indicating whether a transmit power control TPC accumulation form is used.

In a possible design, the uplink channel power control parameter includes a first-type power control parameter based on at least two types of data.

In a possible design, the uplink channel power control parameter includes a first-type power control parameter based on a reference type of data. Optionally, the uplink channel power control parameter further includes a compensation value based on at least one type of data.

In a possible design, the different types of data include the data for which the different subcarrier spacings are used; and the method may further include: receiving, by the UE, information that indicates a reference subcarrier spacing and that is sent by a network device.

In a possible design, the receiving, by UE, information indicating an uplink channel power control parameter of the UE may include: receiving, by using RRC or signaling, the information indicating the uplink channel power control parameter of the UE.

In a possible design, the uplink channel power control parameter includes a transmit power control value.

Correspondingly, this application further provides a power control apparatus, and the apparatus may implement the power control method according to the second aspect. For example, the apparatus may be UE, and the UE may implement the foregoing method by using software or hardware or by using hardware by executing corresponding software.

In a possible design, the apparatus may include a processor and a memory. The processor is configured to support the apparatus in performing corresponding functions in the method according to the second aspect. The memory is configured to be coupled to the processor, and the memory stores a program instruction and data that are necessary for the apparatus. In addition, the apparatus may further include a communications interface, configured to support communication between the apparatus and another network element. The communications interface may be a transceiver.

In a possible design, the apparatus may include a receiving unit and a determining unit. The receiving unit is configured to receive information indicating an uplink channel power control parameter of the UE, where different uplink channel power control parameters of the UE are used for transmitting different types of data. The determining unit is configured to determine uplink channel transmit power of the UE based on the indicated uplink channel power control parameter.

According to a third aspect, this application provides another power control method and apparatus.

In a possible design, the method may include: determining, by user equipment, that both data with a first service type and data with a second service type need to be reported; and then determining uplink channel transmit power of the data with the first service type and uplink channel transmit power of the data with the second service type based on priorities of the first service type and the second service type, to preferentially ensure uplink channel transmit power of data with a higher-priority service type. According to the method, priorities are set for different service types, so that the uplink channel transmit power of the data with the higher-priority service type is preferentially ensured, thereby improving performance of receiving the higher-priority service type.

Correspondingly, this application further provides a power control apparatus, and the apparatus may implement the power control method according to the third aspect. For example, the apparatus may be user equipment, and the user equipment may implement the foregoing method by using software or hardware or by using hardware by executing corresponding software.

In a possible design, the apparatus may include a processor and a memory. The processor is configured to support the apparatus in performing corresponding functions in the method according to the first aspect. The memory is configured to be coupled to the processor, and the memory stores a program instruction and data that are necessary for the apparatus. In addition, the apparatus may further include a communications interface, configured to support communication between the apparatus and another network element. The communications interface may be a transceiver.

In a possible design, the apparatus may include a receiving unit, configured to: determine that both data with a first service type and data with a second service type need to be reported; and determine uplink channel transmit power of the data with the first service type and uplink channel transmit power of the data with the second service type based on priorities of the first service type and the second service type, to preferentially ensure uplink channel transmit power of data with a higher-priority service type.

This application further provides a computer storage medium. The computer storage medium stores a computer program instruction, and when the program instruction is run on a computer, the computer is enabled to perform the method according to any one of the foregoing aspects.

This application further provides a computer program product. When the computer program product is run on a computer, the computer is enabled to perform the method according to any one of the foregoing aspects.

Any apparatus, computer storage medium, or computer program product provided above is configured to perform the corresponding method provided above. Therefore, for beneficial effects that can be achieved by the apparatus, computer storage medium, or computer program product, refer to the beneficial effects of the corresponding solution in the corresponding method provided above. Details are not described herein again.

## BRIEF DESCRIPTION OF DRAWINGS

FIG. 1 is a schematic diagram of a system architecture applicable to a technical solution according to an embodiment of this application;
FIG. 2 is a schematic structural diagram of a network device according to an embodiment of this application;
FIG. 3 is a schematic structural diagram of UE according to an embodiment of this application;
FIG. 4 is a schematic interaction diagram of a power control method according to an embodiment of this application;
FIG. 5 is a schematic interaction diagram of another power control method according to an embodiment of this application;
FIG. 6 is a schematic interaction diagram of another power control method according to an embodiment of this application;
FIG. 7 is a schematic interaction diagram of another power control method according to an embodiment of this application;
FIG. 8 is a schematic interaction diagram of another power control method according to an embodiment of this application;
FIG. 9 is a schematic interaction diagram of another power control method according to an embodiment of this application;
FIG. 10 is a schematic structural diagram of another network device according to an embodiment of this application;
FIG. 11 is a schematic structural diagram of another UE according to an embodiment of this application;
FIG. 12 is a schematic structural diagram of another UE according to an embodiment of this application; and
FIG. 13 is a schematic structural diagram of a power control apparatus according to an embodiment of this application.

## DESCRIPTION OF EMBODIMENTS

UE may send, in one subframe, information carried on a plurality of RBs. RBs at two ends in a frequency domain direction may be used to carry physical uplink control channel (physical uplink control channel, PUCCH) information, and one or more RBs in the middle in the frequency domain direction may be used to carry PUSCH information. Generally, control information is sent on an RB corresponding to a PUCCH, and data is sent on an RB corresponding to a PUSCH.

PUSCH transmit power is determined based on channel characteristics. The channel characteristics may include but are not limited to channel fading, a noise level and an interference level at a receive end, and the like. A base station sets semi-static transmit power based on information such as quality of service (quality of service, QoS), a path loss, and a broadband shadow that are required by user equipment (user equipment, UE), and adjusts the semi-static transmit power by using an MCS-based offset and dynamic power compensation such as a transmit power control (transmit power control, TPC) command.

In this case, available transmit power of the UE is limited. When the PUCCH and the PUSCH are multiplexed through diversity in frequency domain, to ensure correct transmission of the control information, the available transmit power of the UE need to preferentially meet a requirement on transmit power required for transmitting the PUCCH information, and then the remaining available power is used to transmit the PUSCH information.

In LTE, a base station may configure PUSCH power control parameters by using radio resource control (radio resource control, RRC) signaling and downlink control information (downlink control information, DCI). The PUSCH power control parameters may include but are not limited to an uplink power control common (uplink power control common) parameter shown in Table 1 and an uplink power control dedicated (uplink power control dedicated) parameter shown in Table 2. Each type of parameter may be configured by using different RRC IEs (information element, information element).

**Table 1**

| p0-NominalPUSCH | Cell reference open-loop power transmission parameter |
|---|---|
| alpha | Path loss compensation parameter |

**Table 2**

| p0-UE-PUSCH | User open-loop power offset parameter |
|---|---|
| deltaMCS-Enable | MCS-based power adjustment parameter |
| accumulationEnable | Parameter indicating whether a TPC accumulation form is used |

On a UE side, when the UE transmits both PUSCH information and PUCCH information in a cell c, transmit power at which the UE transmits the PUSCH information in a subframe i in the cell c is:

$$P_{\text{PUSCH}c}(i) = \min\left\{\begin{array}{l} 10\log_{10}\left(\hat{P}_{\text{CMAX},c}(i) - \hat{P}_{\text{PUCCH}}(i)\right), \\ 10\log_{10}(M_{\text{PUSCH}c}(i)) + P_{0\_\text{PUSCH}c}(j) + \alpha_c(j) \cdot PL_c + \Delta_{\text{TF},c}(i) + f_c(i) \end{array}\right\}.$$

$\hat{P}_{\text{CMAX},c}(i)$ is a linear value of $P_{\text{CMAX},c}(i)$, and $P_{\text{CMAX},c}(i)$ is the available transmit power of the UE.

$\hat{P}_{\text{PUCCH}}(i)$ is a linear value of $P_{\text{PUCCH}}(i)$, and $P_{\text{PUCCH}}(i)$ is transmit power used when the UE sends the PUCCH information in the subframe i.

$M_{\text{PUSCH}, c}(i)$ is a bandwidth occupied by a time-frequency resource corresponding to a PUSCH in the subframe i, and the time-frequency resource may be measured in a quantity of resource blocks (resource block, RB).

$P_{\text{O\_PUSCH},c}(j) = P_{\text{O\_UE\_PUSCH},c}(j) + P_{\text{O\_NOMINAL\_PUSCH},c}(j)$, where $P_{\text{O\_NOMINAL\_PUSCH}, c}(j)$ is the p0-Nominal-PUSCH parameter in Table 1, and is a nominal value of all UEs in the cell, indicating a cell-level semi-static transmit power reference; and $P_{\text{O\_UE\_PUSCH},c}(j)$ is the p0-UE-PUSCH parameter in Table 2, and is a specific value of each UE, indicating a power offset of each UE at a cell reference level.

$\alpha_c(j)$ is the alpha parameter in Table 1, indicating a path loss compensation degree.

$PL_c$ is a path loss value obtained by the UE by measuring a cell reference signal.

$$\Delta_{\text{TF},c}(i) = 10\log_{10}\left(\left(2^{\text{BPRE} \cdot K_s} - 1\right) \cdot \beta_{\text{offset}}^{\text{PUSCH}}\right)$$

. For a specific meaning of $\Delta_{TF,c}(i)$, refer to section 5.1.1 in the LTE protocol TS 36.213. The meaning is that transmit power allowed by each RB based on a transmission format is adaptive to a data rate for information transmission. Ks is the deltaMCS-Enable parameter in Table 2. Ks is en0, it indicates that the function is disabled, in other words, $\Delta_{TF,c}(i)$ is not considered during power control calculation. Ks is en1, it indicates that the function is enabled, in other words, $\Delta_{TF,c}(i)$ is considered during power control calculation.

$f_c(i)$ is a UE-specific closed loop power control parameter, and may include an accumulation value and an absolute value. A specific mode to be used is determined by using the accumulationEnable parameter in Table 2. If a TPC accumulation function is disabled, $f_c(i) = \delta_{\text{PUSCH}, c}(i - K_{\text{PUSCH}})$, where $f_c(i)$ is a TPC value $\delta_{\text{PUSCH}, c}$ received in a subframe (i-$K_{PUSCH}$). If the TPC accumulation function is enabled, $f_c(i) = f_c(i - 1) + \delta_{PUSCH, c}(i - K_{PUSCH})$, that is, $f_c(i)$ is the sum of a TPC accumulation value before the subframe i and a TPC value $\delta_{PUSCH, c}$ received in the subframe (i-$K_{PUSCH}$).

An NR system has some characteristics different from an LTE system, so that a power control method in the LTE system cannot be applied to the NR system. Specifically, the characteristics may be embodied, but are not limited, to the following aspects:

First, in the LTE system, a power control parameter is designed based on such a requirement that a bit error rate reaches $10^{-1}$ based on a target SINR. However, the NR system includes not only a service, in an enhanced mobile broadband (enhanced mobile broadband, eMBB) scenario, having a same target SINR as conventional data transmission, but also a service in an ultra-reliable and low-latency communications (ultra-reliable and low-latency communications, URLLC) scenario, and certainly, may further include other services. The service in the URLLC scenario has a requirement of high reliability, and requires that a bit error rate reaches $10^{-5}$ based on the target SINR. Therefore, if the PUSCH power control parameter designed based on the bit error rate of $10^{-1}$ in the LTE is still used, a design requirement of the service in the URLLC scenario cannot be met.

Second, in the LTE system, a subcarrier spacing is fixedly 15 kHz (kilohertz). In other words, a bandwidth of one RB is fixedly 180 kHz. Therefore, based on this, the PUSCH power control parameter is designed in the LTE system. However, there may be different subcarrier spacings in the NR system. Therefore, if the PUSCH power control parameter that is set based on the fixed subcarrier spacing of 15 kHz in the LTE is still used, relative poor reliability or a relatively great interference change may be caused due to different power spectral densities (power spectral density, PSD).

Third, in the LTE system, only one type of waveform, namely, a DFT-s-OFDM waveform, is used to transmit data in an uplink direction, where DFT is an English abbreviation of discrete Fourier transform (discrete fourier transform), and OFDM is an English abbreviation of orthogonal frequency division multiple multiplexing (orthogonal frequency division multiplexing). Therefore, based on this, the PUSCH power control parameter is designed in the LTE system. However, in the NR system, a plurality of types of waveforms may be used to transmit data in the uplink direction. For example, an OFDM waveform and the DFT-s-OFDM waveform may be used. Therefore, if the PUSCH power control parameter that is set based on the DFT-s-OFDM waveform in the LTE is still used, a received SINR may be inconsistent with an expected SINR. Consequently, an expected objective of power control cannot be achieved.

Based on this, this application provides a power control method and an apparatus, and a basic principle of the method and apparatus is that different types of data are transmitted by using different PUSCH power control parameters of UE. The different types of data may include but is not limited to at least one of data with different service types, data for which different subcarrier spacings are used, and data for which different waveforms are used.

The technical solutions provided in this application may be applied to various communications systems, for example, current 2G, 3G, and 4G communications systems, and a future evolved network such as a 5G communications system. For example, the communications systems may include an LTE system, a third-generation partnership project (3rd generation partnership project, 3GPP)-related cellular system, and other communications systems. Particularly, the technical solutions may be applied to a 5G NR system. It should be noted that a 5G standard may include scenarios such as machine-to-machine (machine to machine, M2M) communication, D2M communication, macro-micro communication, enhanced mobile Internet (enhance mobile broadband, eMBB), ultra-reliable and low-latency communications (ultra reliable & low latency communication, URLLC), and massive Internet of things communication (massive machine type communication, mMTC). These scenarios may include but are not limited to a communication scenario between UEs, a communication scenario between network devices, and a communication scenario between a network device and UE. The technical solutions provided in the embodiments of this application may be further applied to a scenario of, for example, communication between UEs or communication between network devices in a 5G communications system.

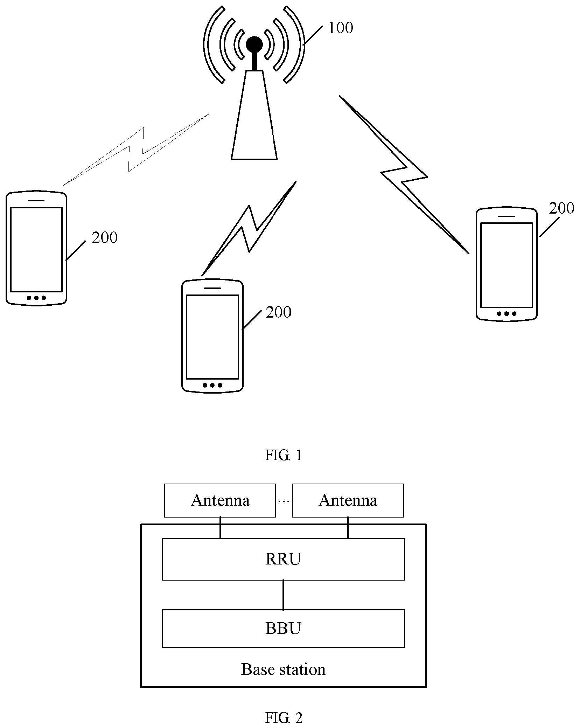

The technical solutions provided in the embodiments of this application may be applied to a system architecture shown in FIG. 1. The system architecture may include a network device 100 and one or more UEs 200 connected to the network device 100.

The network device 100 may be a device that can communicate with the UE 200. The network device 100 may be a relay node, an access point, or the like. The network device 100 may be a base transceiver station (base transceiver station, BTS) in a global system for mobile communications (global system for mobile communications, GSM) or in a code division multiple access (code division multiple access, CDMA) network, may be a NodeB (NodeB) in wideband code division multiple access (wideband code division multiple access, WCDMA), or may be an eNB or an eNodeB (evolved NodeB) in LTE. Alternatively, the network device 100 may be a radio controller in a cloud radio access network (cloud radio access network, CRAN) scenario. Alternatively, the network device 100 may be a network device in a future 5G network or a network device in a future evolved PLMN network, or may be a wearable device, a vehicle-mounted device, or the like.

The UE 200 may be an access terminal, a UE unit, a UE station, a mobile station, a mobile console, a remote station, a remote terminal, a mobile device, a UE terminal, a terminal, a wireless communications device, a UE agent, a UE apparatus, or the like. The access terminal may be a cellular phone, a cordless phone, a session initiation protocol (Session Initiation Protocol, SIP) phone, a wireless local loop (Wireless Local Loop, WLL) station, a personal digital assistant (Personal Digital Assistant, PDA), a handheld device having a wireless communication function, a computing device, another processing device connected to a wireless modem, a vehicle-mounted device, a wearable device, a terminal in a future 5G network, a terminal in a future evolved PLMN network, or the like.

In an example, a general-purpose hardware architecture of the network device 100 is described by using an example in which the network device 100 is a base station. As shown in FIG. 2, the base station may include a building baseband unit (building baseband unit, BBU) and a remote radio unit (remote radio unit, RRU). The RRU is connected to an antenna feeder system (including, an antenna), and the BBU and the RRU may be separately used as required. It should be noted that during specific implementation, the network device 100 may alternatively use another general-purpose hardware architecture, and is not merely limited to the general-purpose hardware architecture shown in FIG. 2.

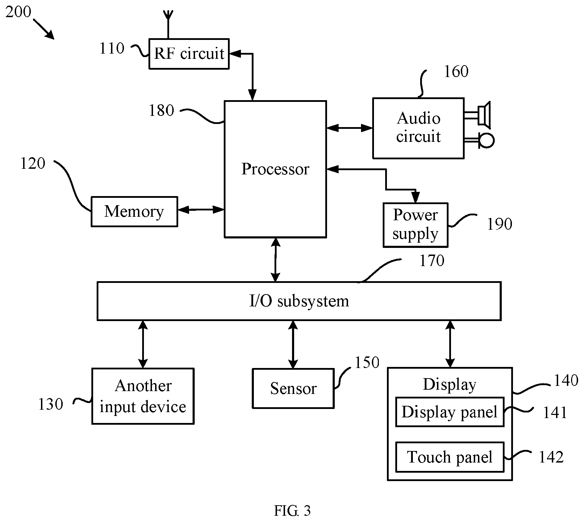

In an example, a general-purpose hardware architecture of the UE 200 is described by using an example in which the UE 200 is a mobile phone. As shown in FIG. 3, the mobile phone may include components such as a radio frequency (radio Frequency, RF) circuit 110, a memory 120, another input device 130, a display 140, a sensor 150, an audio circuit 160, an I/O subsystem 170, a processor 180, and a power supply 190. A person skilled in the art may understand that a structure of the mobile phone shown in FIG. 3 constitutes no limitation on the mobile phone, and the mobile phone may include components more or fewer than those shown in FIG. 3. Some components may be combined, some components may be split, or a different component configuration may be used. A person skilled in the art may understand that the display 140 belongs to a user interface (user Interface, UI), and the display 140 may include a display panel 141 and a touch panel 142. In addition, the mobile phone may include components more or fewer than those shown in FIG. 3. The mobile phone may further include functional modules or devices such as a camera and a Bluetooth module, which are not shown in FIG. 3. Details are not described herein.

Further, the processor 180 is connected to the RF circuit 110, the memory 120, the audio circuit 160, the I/O subsystem 170, and the power supply 190 separately. The I/O subsystem 170 is connected to the another input device 130, the display 140, and the sensor 150 separately. The RF circuit 110 may be configured to send and receive signals in an information sending and receiving process or a call process. Particularly, after receiving downlink information of the base station, the RF circuit 110 sends the downlink information to the processor 180 for processing. The memory 120 may be configured to store a software program and module. The processor 180 executes various function applications of the mobile phone and processes data, by running the software program and module that are stored in the memory 120. The another input device 130 may be configured to: receive entered digit or character information, and generate key signal input related to user settings and function control of the mobile phone. The display 140 may be configured to display information entered by a user or information provided for the user, and various menus of the mobile phone, and may also receive user input. The sensor 150 may be an optical sensor, a motion sensor, or another sensor. The audio circuit 160 may provide an audio interface between a user and the mobile phone. The I/O subsystem 170 is configured to control a peripheral device that performs input and output, and the peripheral device may include another device input controller, sensor controller, and display controller. The processor 180 is a control center of the mobile phone, and is connected to all components of the entire mobile phone by using various interfaces and lines. The processor 180 performs various functions of the mobile phone and processes data, by running or executing the software program and/or module that are/is stored in the memory 120 and by invoking data stored in the memory 120, to perform overall monitoring on the mobile phone. The power supply 190 (for example, a battery) is configured to supply power to all the foregoing components. The power supply may be logically connected to the processor 180 by using a power management system, to implement functions such as charging and discharging management and power consumption management by using the power management system.

The following explains and describes some terms in this application to help a reader have a better understanding:

An uplink channel may include a physical uplink shared channel PUSCH, a physical uplink control channel PUCCH, a new radio physical uplink shared channel NR-PUSCH, a new radio physical uplink control channel NR-PUCCH, and the like. An example in which transmit power for the PUSCH used as the uplink channel is configured is used below for description.

A first-type power control parameter may include at least one of a cell reference open-loop power transmission parameter, a path loss compensation parameter, a user open-loop power offset parameter, an MCS-based power adjustment parameter, and a parameter indicating whether a TPC accumulation form is used. For ease of description, the foregoing power control parameters are collectively referred to as the first-type power control parameter in this specification.

A second-type power control parameter may include a transmit power control command (transmit power control command, TPC) value and the like.

A reference type of data may be any type of data. When different types of data are data with different service types, a service type used for the reference type of data is defined as a reference service type. When the different types of data are data for which different subcarrier spacings are used, a subcarrier spacing used for the reference type of data is defined as a reference subcarrier spacing. When the different types of data are data for which different waveforms are used, a waveform used for the reference type of data is defined as a reference waveform. It should be noted that, for ease of description, the concept "reference type of data" is introduced into this application. During actual implementation, a person skilled in the art should understand that a network device and UE may not determine a reference type of data, but directly determines a reference service type, a reference subcarrier spacing, and/or a reference waveform.

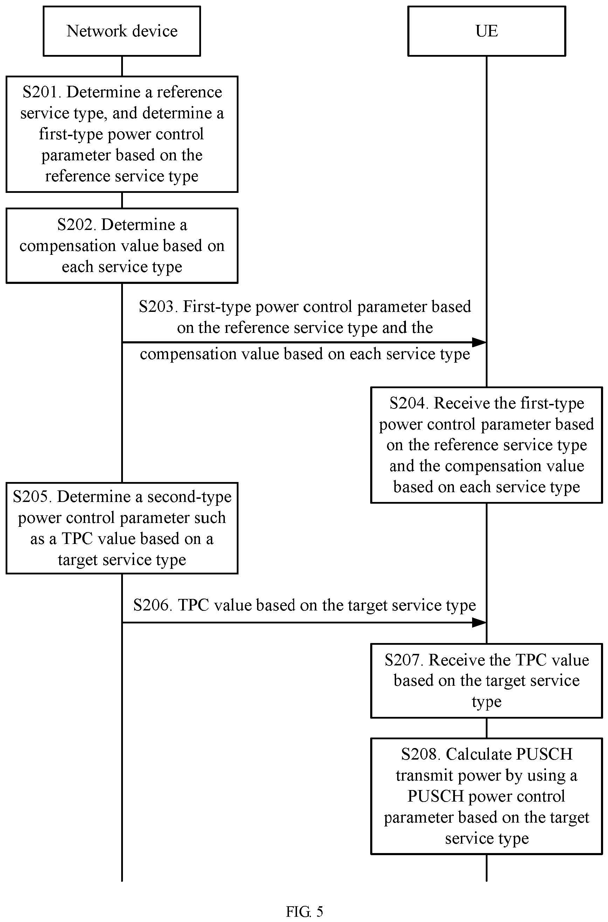

It should be noted that, for ease of description, the "reference service type", the "reference subcarrier spacing", and the "reference waveform" are introduced into this application. It may be understood that, during actual implementation, these references may not be defined. In this case, in the following embodiments shown in FIG. 5, FIG. 6, and FIG. 8, a network device may determine a first-type power control parameter in any manner, and then determine a compensation value based on the determined first-type power control parameter.

The term "a plurality of" in this specification means at least two. The terms "first", "second", and the like in this specification are merely used to distinguish between different objects, but are not intended to limit a sequence of the terms. For example, a first symbol group and a second symbol group are merely used to distinguish between different symbol groups, but are not intended to limit a sequence of the symbol groups. The term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

It should be noted that PUSCH transmit power described in the following may be considered as transmit power at which the UE transmits PUSCH information in a subframe/slot i in a cell c. The subframe i may be any subframe/slot, and the cell c may be any cell served by the network device, for example, a base station. For ease of description, neither i nor c is mentioned in the following PUSCH transmit power calculation formulas.

This application provides methods for configuring a PUSCH power control parameter based on a service type, a subcarrier spacing, and a waveform. The methods are separately described as follows:

A PUSCH power control parameter is configured based on a service type.

A criterion used for distinguishing between service types is not limited in this application. For example, services with same QoS may be grouped into one service type, and services with different QoS may be grouped into different service types. For another example, services in a same scenario may be grouped into one service type, and services in different scenarios may be grouped into different service types. For example, a service in an eMBB scenario and a service in a URLLC scenario are grouped into different service types. For still another example, services that require uplink transmission authorization may be grouped into one service type, and services that do not require uplink transmission authorization may be grouped into one service type.

The network device may configure different power control parameters for different service types, or may configure same power control parameters for different service types. For example, cell reference open-loop power transmission parameters for two service types are the same.

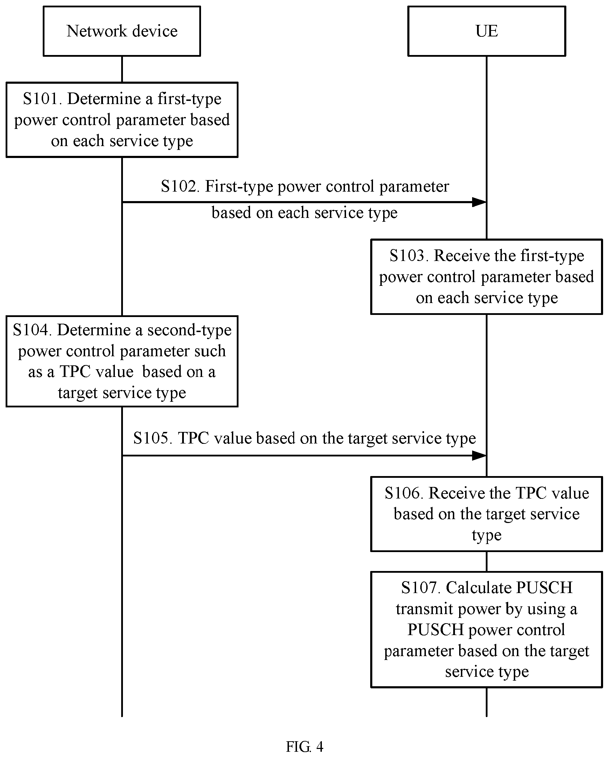

FIG. 4 is a schematic interaction diagram of a power control method according to this application. The method may include the following steps S101 to S107.

S101. A network device determines a first-type power control parameter based on each service type.

The network device may determine one or more power control parameter values of the first-type power control parameter based on a requirement such as quality of service of each service type or a scenario requirement. The "each service type" may be each of some or all service types supported by the network device, or may be each of some or all service types that can be reported by UE. For example, each service type may be each of some or all service types required or frequently used by the UE. A specific implementation of learning, by the network device, a specific service type that can be reported by the UE is not limited in this application. For example, for this, refer to the prior art.

S102. The network device sends the first-type power control parameter based on each service type to the UE.

The network device may configure the first-type power control parameter for the UE in a semi-static manner, for example, sending the first-type power control parameter based on each service type to the UE by using RRC signaling, MAC signaling, or the like. In the RRC signaling or the MAC signaling, the network device may indicate an association relationship between a first-type power control parameter and a service type in an explicit manner. Certainly, this is not limited in this application.

A service type 1 and a service type 2 are used as an example. In an example of this application, when the network device configures power control parameters for different service types by using an RRC IE, configuration information may be as follows:

A p0-NominalPUSCH parameter configured by the network device for each service type may be shown in Table 3:

**Table 3**

| p0-NominalPUSCH-1 | Cell reference open-loop power transmission parameter based on the service type 1 |
|---|---|

(continued)

| p0-NominalPUSCH-2 | Cell reference open-loop power transmission parameter based on the service type 2 |

An alpha parameter configured by the network device for each service type may be shown in Table 4:

**Table 4**

| alpha-1 | Path loss compensation parameter based on the service type 1 |
| alpha-2 | Path loss compensation parameter based on the service type 2 |

A p0-UE-PUSCH configured by the network device parameter for each service type may be shown in Table 5:

**Table 5**

| p0-UE-PUSCH-1 | User open-loop power offset parameter based on the service type 1 |
| p0-UE-PUSCH-2 | User open-loop power offset parameter based on the service type 2 |

A deltaMCS-Enable parameter configured by the network device for each service type may be shown in Table 6:

**Table 6**

| deltaMCS-Enable-1 | MCS-based power adjustment parameter based on the service type 1 |
| deltaMCS-Enable-2 | MCS-based power adjustment parameter based on the service type 2 |

An accumulationEnable parameter configured by the network device for each service type may be shown in Table 7:

**Table 7**

| accumulationEnable-1 | Parameter indicating whether a TPC accumulation form is used for the service type 1 |
| accumulationEnable-2 | Parameter indicating whether a TPC accumulation form is used for the service type 2 |

It may be understood that the foregoing configuration information is merely an example. During actual implementation, a quantity of service types is not limited in this application. The foregoing example is described by using an example in which each first-type power control parameter is configured for a corresponding service type, in other words, each first-type power control parameter is related to a service type. During actual implementation, any one or more first-type power control parameters may be unrelated to a service type. In this case, one value may be configured for the one or more first-type power control parameters, and all service types may share the power control parameter. For example, assuming that an MCS-based power adjustment parameter is unrelated to a service type, the network device may configure only one MCS-based power adjustment parameter for the UE, and all service types may share the power control parameter.

S103. The UE receives the first-type power control parameter based on each service type. When receiving the first-type power control parameter based on each service type, the UE may store the first-type power control parameter based on each service type.

S101 to S103 may be understood as that the network device configures the first-type power control parameter based on each service type.

S104. The network device determines a second-type power control parameter such as a TPC value based on a target service type, where the target service type is a service type of data that needs to be currently transmitted by the UE.

When the UE needs to transmit uplink data, the UE usually needs to send related information of the reported data to the network device, so that the network device allocates, to the UE, a resource required for transmitting the data. The related information may include but is not limited to information such as a size and a service type of the reported data. Certainly, this is not limited in this application.

S105. The network device sends the TPC value based on the target service type to the UE.

The network device may configure the TPC value based on the target service type for the UE in a dynamic manner. For example, the network device may send the TPC value based on the target service type to the UE by using DCI. In the DCI, the network device may indicate an association relationship between a TPC value and a service type in an explicit manner.

In an example of this application, a PUSCH power control field in the DCI may include a power control value indication area and a service type indication area. The power control value indication area is used to indicate a TPC value. A quantity of bits occupied by the power control value indication area may be represented as $\log_2 N$, where N is a quantity of quantized power adjustment values. The service type indication area is used to indicate a service type corresponding to a TPC value. A quantity of bits occupied by the service type indication area may be represented as $\log_2 M$, where M is a total quantity of service types corresponding to power control parameters configured by the network device for the UE. A DCI format may be shown in Table 8:

**Table 8**

| PUSCH power control field | A field length is $\log_2 N$. |
|---|---|
| Service type indication field | A field length is $\log_2 M$. |

In an example of this application, TPC values based on different service types correspond to different power adjustment values, and/or initial values of accumulated transmit power adjustment values based on the different service types are different. The initial value may be determined by the network device and the UE according to a protocol, or may be configured by the network device for the UE by using signaling.

S106. The UE receives the TPC value that is based on the target service type and that is sent by the network device. After receiving the TPC value, the UE may store the TPC value, or may update an accumulation value of a transmit power adjustment value based on the target service type.

S104 to S106 may be understood as that the network device configures the second-type power control parameter based on the target service type.

It may be understood that this embodiment is described by using an example in which both the first-type power control parameter and the second-type power control parameter are related to a service type. During actual implementation, one of the first-type power control parameter and the second-type power control parameter may be related to a service type, and the other is unrelated to the service type. It may be understood that if the first-type power control parameter is unrelated to the service type, in S101 to S103, the network device may configure the first-type power control parameter for the UE in a manner provided in the prior art. If the second-type power control parameter is unrelated to the service type, the network device may configure the TPC value for the UE in a manner provided in the prior art. Specific examples of the manner are not listed one by one.

S107. The UE calculates PUSCH transmit power by using a PUSCH power control parameter (including the first-type power control parameter and the second-type power control parameter) based on the target service type, and then sends data with the target service type by using the transmit power; and a base station receives the data.

It is assumed that the foregoing power control parameters (including the second-type power control parameter and each power control parameter of the first-type power control parameter) are related to the service type. The UE may calculate PUSCH transmit power by using a power control parameter based on a service type x, so as to send data with the service type x on a PUSCH. A calculation formula is as follows:

$$P_{\text{PUSCHx}} = \min \left\{ \begin{array}{l} P_{\text{availablex}}, \\ 10\log_{10}(M_{\text{PUSCHx}}) + P_{\text{O\_PUSCHx}} + \alpha_{x,c} \cdot PL + \Delta_{\text{TF,x}} + f_x \end{array} \right\}.$$

$P_{\text{available},x}$ is available power for sending the data with the service type x on the PUSCH.

$M_{\text{PUSCH,x}}$ is a bandwidth occupied by the data with the service type x on a time-frequency resource corresponding to the PUSCH, and the time-frequency resource may be measured in a quantity of RBs.

$P_{\text{O\_PUSCH,x}} = P_{\text{O\_UE\_PUSCH,x}} + P_{\text{O\_NOMINAL\_PUSCH,x}}$, where $P_{\text{O\_NOMINAL\_PUSCH,x}}$ is a p0-NominalPUSCH parameter based on the service type x in Table 3, and $P_{\text{O\_UE\_PUSCH,x}}$ is a p0-UE-PUSCH parameter based on the service type x in Table 5.

$\alpha_x$ is an alpha parameter based on the service type x in Table 4. $\Delta_{TF,x} = 10\log_{10}\left(\left(2^{BPREK_{s,x}} - 1\right) \cdot \beta_{offset}^{PUSCH}\right)$, where $K_{s,x}$ is a deltaMCS-Enable parameter based on the service type x in Table 6.

$f_x$ is a UE-specific closed loop power control parameter, and may include an accumulation value and an absolute value. A specific mode to be used is determined by using an accumulationEnable parameter based on the service type x in Table 7. Calculation manners in a TPC accumulation enabled case and in a TPC accumulation disabled case have been described above, and therefore details are not described herein again. Used $\delta_{\text{PUSCH,x}}$ is a TPC value based on the service type x.

According to the power control method provided in this embodiment, the network device configures, for the UE by using signaling, the one or more first-type power control parameters related to a service type, so that when sending data with different service types, the UE can calculate PUSCH transmit power by using power control parameters based on the service types. This helps implement different PUSCH transmit power for the different service types, and meet performance requirements of the different service types.

FIG. 5 is a schematic interaction diagram of a power control method according to this application. The method may include the following steps S201 to S208.

S201. A network device determines a reference service type, and determines, based on the reference service type, a first-type power control parameter based on the reference service type.

A service type that is used by the network device as the reference service type is not limited in this application. In principle, any service type may be used as the reference service type. For example, the network device may use, as the reference service type, a conventional service type for which a target bit error rate is designed to be 10%.

S202. When determining that UE sends data with each service type, the network device determines a compensation value (which is referred to as a "compensation value based on each service type" below) of PUSCH transmit power of the UE.

The network device may determine, based on a requirement such as quality of service of each service type or a scenario requirement, a compensation value based on each service type. For descriptions of each service type, refer to the foregoing descriptions. Details are not described herein again.

S203. The network device sends the first-type power control parameter based on the reference service type and the compensation value based on each service type to the UE.

The network device may configure the first-type power control parameter based on the reference service type and the compensation value based on each service type for the UE in a semi-static manner, for example, sending the first-type power control parameter based on the reference service type and the compensation value based on each service type to the UE by using one or more pieces of RRC signaling, one or more pieces of MAC signaling, or the like. In the RRC signaling or the MAC signaling, the network device may indicate an association relationship between a compensation value and a service type in an explicit manner.

S204. The UE receives the first-type power control parameter based on the reference service type and the compensation value based on each service type. After receiving the first-type power control parameter based on the reference service type and the compensation value based on each service type, the UE may store the first-type power control parameter based on the reference service type and the compensation value based on each service type.

S201 to S204 are described by using an example in which the network device sends the compensation value based on each service type to the UE by using signaling. In an embodiment of this application, the network device and the UE may preset or predefine a compensation value based on a service type according to a protocol. This can reduce signaling overheads. In this case, in the method shown in FIG. 5, the network device may not perform steps of determining and sending a compensation value based on a target service type, and the UE may not perform steps of receiving and storing the compensation value based on the target service type. Certainly, a compensation value or compensation values based on one or more service types may be alternatively preset or predefined according to a protocol. These compensation values may be set before delivery. Then, compensation values based on other service types are configured by using signaling, for example, by using RRC signaling or by using MAC signaling. In another embodiment of this application, a compensation value based on the reference service type is 0. Therefore, the network device may not send the compensation value based on the reference service type to the UE.

For S205 to S208, refer to S104 to S107, or refer to other implementations.

It may be understood that this embodiment is described by using an example in which both a compensation value and a second-type power control parameter are related to a service type. During actual implementation, one of the compensation value and the second-type power control parameter may be related to a service type, and the other is unrelated to the service type. Specific examples are not listed one by one herein.

It is assumed that the compensation value is related to the service type and that the second-type power control parameter is unrelated to the service type. The UE may calculate PUSCH transmit power by using a power control parameter based on a service type x, so as to send data with the service type x on a PUSCH. A calculation formula is as follows:

$$P_{\text{PUSCH,x}} = \min\left\{\begin{array}{l} P_{\text{available,x}}, \\ 10\log_{10}(M_{\text{PUSCH}}) + P_{0\_\text{PUSCH}} + \alpha \cdot PL + \Delta_{traffic x} + \Delta_{\text{TF}} + f \end{array}\right\}.$$

$\Delta_{traffic,x}$ is a compensation value based on the service type x. When the service type x is the reference service type, the compensation value is 0. When the service type x is not the reference service type, the compensation value is obtained by using a delta-traffic value based on the service type. For explanations of other parameters, refer to the foregoing descriptions. Details are not described herein again.

According to the power control method provided in this embodiment, the network device configures the first-type power control parameter based on the reference service type and the compensation value based on each service type for the UE by using signaling, so that when sending data with different service types, the UE can calculate PUSCH transmit power by using power control parameters based on the service types. This helps implement different PUSCH transmit power for the different service types, and meet performance requirements of the different service types.

It may be understood that some features in FIG. 4 and some features in FIG. 5 may be combined when there is a collision, to obtain a new embodiment. Details are not described in this application.

A PUSCH power control parameter is configured based on a used subcarrier spacing.

The used subcarrier spacing is a subcarrier spacing used during PUSCH information transmission. In an NR system, the UE may use a same subcarrier spacing or different subcarrier spacings to transmit uplink data. An implementation for using a subcarrier spacing to transmit data is not limited in this application. For example, for this refer to the prior art.

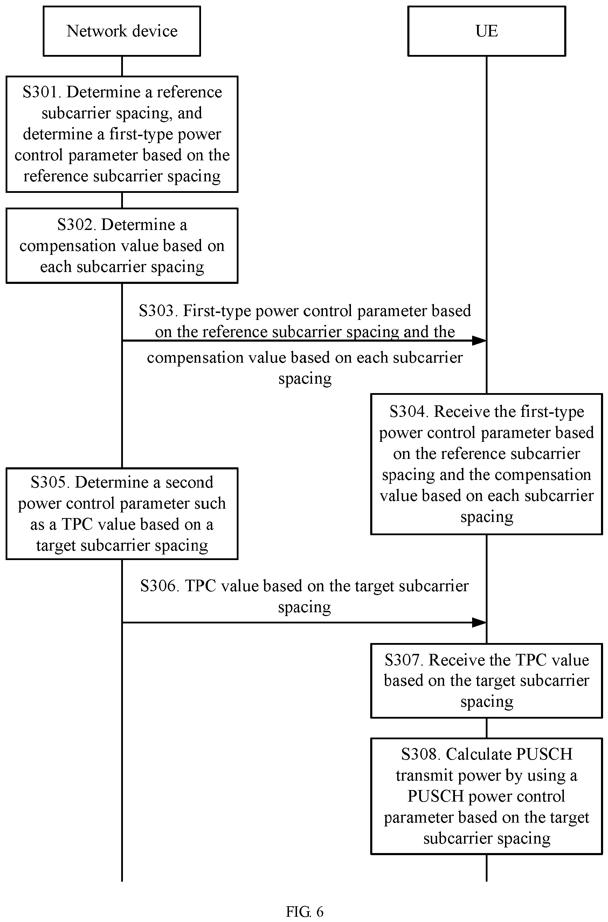

FIG. 6 is a schematic interaction diagram of a power control method according to this application. The method may include the following steps S301 to S308.

S301. A network device determines a reference subcarrier spacing, and determines, based on the reference subcarrier spacing, a first-type power control parameter based on the reference subcarrier spacing.

A subcarrier spacing to be used as the reference subcarrier spacing is not limited in this application. In principle, any subcarrier spacing may be used as the reference subcarrier spacing. For example, the network device may use 15 kHz as the reference subcarrier spacing.

The reference subcarrier spacing may be preset by the network device and UE according to a protocol, for example, being set before delivery, or may be configured by the network device and then notified to the UE by using signaling such as RRC signaling or MAC signaling. This is not limited in this application. For example, the network device may send, to the UE, information indicating the reference subcarrier spacing. The information indicating the reference subcarrier spacing may include but is not limited to the reference subcarrier spacing or an index of the reference subcarrier spacing.

S302. The network device determines a compensation value (which is referred to as a "compensation value based on each subcarrier spacing") of PUSCH transmit power of the UE when data is transmitted by using each subcarrier spacing.

When the UE sends data to the network device, a used subcarrier spacing may not be a fixed value. However, there is usually a limited quantity of subcarrier spacings, and these subcarrier spacings may be preset by the network device and the UE according to a protocol, or may be configured by the network device and then notified to the UE. Each subcarrier spacing herein may be each of some or all subcarrier spacings supported by the network device, or may be each of some or all subcarrier spacings that can be used by the UE to send uplink data.

S303. The network device sends the first-type power control parameter based on the reference subcarrier spacing and the compensation value based on each subcarrier spacing to the UE.

The network device may configure the first-type power control parameter based on the reference subcarrier spacing and the compensation value based on each subcarrier spacing for the UE in a semi-static manner, for example, sending the first-type power control parameter based on the reference subcarrier spacing and the compensation value based on each subcarrier spacing to the UE by using one or more pieces of RRC signaling, one or more pieces of MAC signaling, or the like. In the RRC signaling or the MAC signaling, the network device may indicate an association relationship between a compensation value and a subcarrier spacing in an explicit manner.

It is assumed that a subcarrier spacing 2 and a subcarrier spacing 3 are compared with a subcarrier spacing 1 (namely, the reference subcarrier spacing). Configuration information included in the RRC signaling may be shown in Table 9:

**Table 9**

| delta -subcarrier -spacing -2 | Compensation value based on the subcarrier spacing 2 |
| delta -subcarrier -spacing -3 | Compensation value based on the subcarrier spacing 3 |

S304. The UE receives the first-type power control parameter based on the reference subcarrier spacing and the compensation value based on each subcarrier spacing. After receiving the first-type power control parameter based on the reference subcarrier spacing and the compensation value based on each subcarrier spacing, the UE may store the first-type power control parameter based on the reference subcarrier spacing and the compensation value based on each subcarrier spacing.

S301 to S304 are described by using an example in which the network device sends the compensation value based on each subcarrier spacing to the UE by using signaling. In an embodiment of this application, the network device and the UE may preset or predefine a compensation value based on a subcarrier spacing according to a protocol. This can reduce signaling overheads. In this case, in the method shown in FIG. 6, the network device may not perform steps of determining and sending the compensation value based on each subcarrier spacing, and the UE may not perform steps of receiving and storing the compensation value based on each subcarrier spacing. Certainly, a compensation value or compensation values based on one or more subcarrier spacings may be alternatively preset or predefined according to a protocol. These compensation values may be set before delivery. Then, compensation values based on other subcarrier spacings are configured by using signaling, for example, by using RRC signaling or by using MAC signaling. In another embodiment of this application, a compensation value based on a reference subcarrier spacing is 0. Therefore, the network device may not send the compensation value based on the reference subcarrier spacing to the UE.

S305. The network device determines a second power control parameter such as a TPC value based on a target subcarrier spacing, where the target subcarrier spacing is a subcarrier spacing used for data that needs to be currently transmitted by the UE.

A subcarrier spacing used by the UE to send uplink data is usually configured by the network device, and therefore the network device can learn of the target subcarrier spacing.

S306. The network device sends the TPC value based on the target subcarrier spacing to the UE.

The network device may configure the TPC value based on the target subcarrier spacing for the UE in a dynamic manner, for example, send a TPC value based on each subcarrier spacing to the UE by using DCI. In the DCI, the network device may indicate an association relationship between a TPC value and a subcarrier spacing in an explicit manner.

In an example of this application, TPC values based on different subcarrier spacings correspond to different power adjustment values, and/or initial values of accumulated transmit power adjustment values based on the different subcarrier spacings are different. The initial value may be determined by the network device and the UE according to a protocol, or may be configured by the network device for the UE by using signaling.

S307. The UE receives the TPC value that is based on the target subcarrier spacing and that is sent by the network device. After receiving the TPC value, the UE may store the TPC value, or may update an accumulation value of a transmit power adjustment value based on the target subcarrier spacing.

It may be understood that this embodiment is described by using an example in which both a compensation value and a second-type power control parameter are related to a service type. During actual implementation, one of the compensation value and the second-type power control parameter may be related to a service type, and the other is unrelated to the service type. Specific examples are not listed one by one herein.

S308. The UE calculates PUSCH transmit power by using a PUSCH power control parameter (including the compensation value and the second-type power control parameter) based on the target subcarrier spacing, and sends, by using the transmit power, data for which the target subcarrier spacing is used, and a base station receives the data.

It is assumed that the compensation value is related to the service type and that the second-type power control parameter is unrelated to the service type. The UE may calculate PUSCH transmit power by using a power control parameter based on a subcarrier spacing $F_x$, so as to send data on a PUSCH. A calculation formula is as follows:

$$P_{\text{PUSCH}} = \min\left\{ \begin{array}{l} P_{\text{available}}, \\ 10\log_{10}(M_{\text{PUSCH}}) + P_{\text{O\_PUSCH}} + \alpha \cdot PL + \Delta_{\text{TF}} + f + \Delta_{F,x} \end{array} \right\}.$$

$\Delta_{F,x}$ is a compensation value based on the subcarrier spacing $F_x$. For explanations of other parameters, refer to the foregoing descriptions. Details are not described herein again. In an example, $\Delta_{F,x} = 10\log_{10}(F_x / F_0)$, where $F_0$ is the reference subcarrier spacing. When $F_x = F_0$, $\Delta_{F,x} = 0$. When $F_x \neq F_0$, $\Delta_{F,x}$ may be obtained by using a delta-subcarrier-spacing value corresponding to the subcarrier spacing.

It should be noted that this embodiment is described by using an example in which PUSCH transmit power is configured based on a subcarrier spacing. During actual implementation, this embodiment may also be applied to configurations of, for example, PUCCH transmit power and sounding reference signal (sounding reference signal, SRS) transmit power. In this case, the PUSCH power control parameter in this embodiment is changed to a PUCCH power control parameter or an SRS power control parameter. Details are not described herein.

According to the power control method provided in this embodiment, the network device configures the first-type power control parameter based on the subcarrier spacing and the compensation value of transmit power based on each subcarrier spacing for the UE by using signaling, so that when sending data by using different subcarrier spacings, the UE can calculate PUSCH transmit power by using power control parameters based on the subcarrier spacings. This helps implement different PUSCH transmit power of data for which the different subcarrier spacings are used, and meet a performance requirement of the data for which the different subcarrier spacings are used.

A PUSCH power control parameter is configured based on a used waveform.

The used waveform is a waveform used during PUSCH information transmission. In an NR system, the UE may transmit uplink data by using different waveforms. An implementation of transmitting uplink data in a specific case by using a corresponding waveform is not limited in this application. For a specific implementation, refer to the prior art.

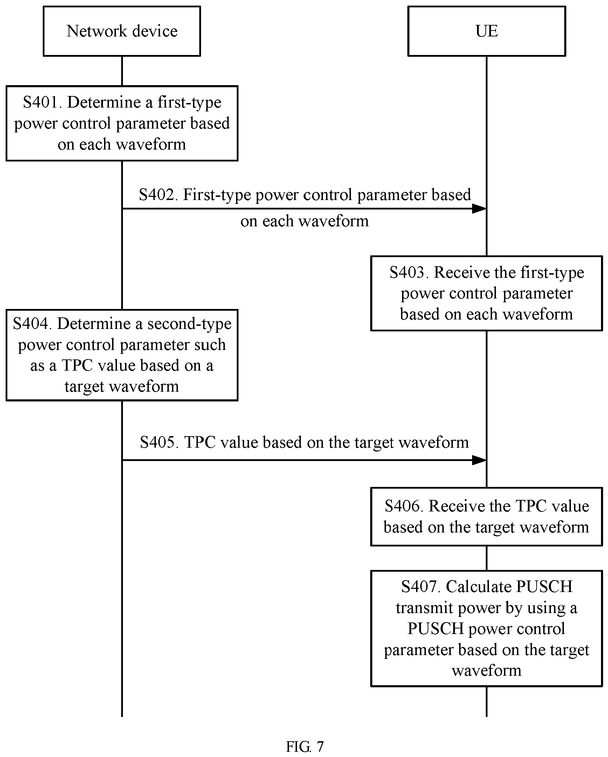

FIG. 7 is a schematic interaction diagram of a power control method according to this application. The method may include the following steps S401 to S407.

S401. A network device determines a first-type power control parameter based on each waveform.

Each waveform may be each of some or all uplink waveforms supported by UE. For example, each waveform may be each service type in some or all waveforms required or frequently used by the UE.

S402. The network device sends the first-type power control parameter based on each waveform to the UE.

The network device may configure the first-type power control parameter for the UE in a semi-static manner, for example, sending the first-type power control parameter based on each waveform to the UE by using RRC signaling, MAC signaling, or the like. In the RRC signaling or the MAC signaling, the network device may indicate an association relationship between a first-type power control parameter and a waveform in an explicit manner. Certainly, this is not limited in this application.

A waveform 1 and a waveform 2 are used as an example. In an example of this application, when the network device configures power control parameters based on different waveforms by using an RRC IE, configuration information can be deduced based on Table 3 to Table 7. Details are not described herein again.

It may be understood that the foregoing configuration information is merely an example. During actual implementation, a quantity of waveforms is not limited in this application. In addition, the foregoing example is described by using an example in which each first-type power control parameter is configured for a corresponding waveform, in other words, each first-type power control parameter is related to a waveform. During actual implementation, any one or more first-type power control parameters may be unrelated to a waveform. In this case, one value may be configured for the any one or more first-type power control parameters, and data on all waveforms may share the power control parameter.

S403. The UE receives the first-type power control parameter based on each waveform. When receiving the first-type power control parameter based on each waveform, the UE may store the first-type power control parameter based on each waveform.

S401 to S403 may be understood as that the network device configures the first-type power control parameter based on each waveform.

S404. The network device determines a second-type power control parameter such as a TPC value based on a target waveform, where the target service type is a waveform used for data that needs to be currently transmitted by the UE.

S405. The network device sends the TPC value based on the target waveform to the UE.

The network device may configure the TPC value based on the target service type for the UE in a dynamic manner, for example, sending the TPC value based on the target waveform to the UE by using DCI. In the DCI, the network device may indicate an association relationship between a TPC value and a waveform in an explicit manner. Certainly, this is not limited herein. A DCI format can be deduced based on Table 8. Details are not described herein again.

S406. The UE receives and stores the TPC value that is based on the target waveform and that is sent by the network device. After receiving the TPC value, the UE may store the TPC value, or may update an accumulation value of a transmit power adjustment value based on the target waveform.

S404 to S406 may be understood as that the network device configures the second-type power control parameter based on the target waveform.

In an example of this application, a DCI format can be deduced based on Table 8. Details are not described herein again.

In an example of this application, TPC values based on different waveforms correspond to different power adjustment values, and/or initial values of accumulated transmit power adjustment values based on the different waveforms are different. The initial value may be determined by the network device and the UE according to a protocol, or may be configured by the network device for the UE by using signaling.

It may be understood that this embodiment is described by using an example in which both the first-type power control parameter and the second-type power control parameter are related to a waveform. During actual implementation, one of the first-type power control parameter and the second-type power control parameter may be related to a waveform, and the other is unrelated to the waveform. Specific examples are not listed one by one herein.

S407. The UE calculates PUSCH transmit power by using a PUSCH power control parameter (including the first-type power control parameter and the second-type power control parameter) based on the target waveform, and sends, by using the transmit power, data for which the target waveform is used, and a base station receives the data.

In an example of this application, it is assumed that a p0-NominalPUSCH parameter, a p0-UE-PUSCH parameter, and a deltaMCS-Enable parameter of the first-type power control parameter is related to a waveform and that other parameters of the first-type power control parameter and the second-type power control parameter are unrelated to the waveform. The UE sends data on a PUSCH by using a waveform m, and may calculate PUSCH transmit power by using a power control parameter based on the waveform m. A calculation formula is as follows:

$$P_{\text{PUSCH, m}} = \min\left\{\begin{array}{l} P_{\text{available}}, \\ 10\log_{10}(M_{\text{PUSCH}}) + P_{\text{O\_PUSCH, m}} + \alpha \cdot PL + \Delta_{\text{TF, m}} + f \end{array}\right\}.$$

$P_{\text{O\_PUSCH,m}} = P_{\text{O\_UE\_PUSCH,m}} + P_{\text{O\_NOMINAL\_PUSCH,m}}$, where $P_{\text{O\_NOMINAL\_PUSCH,m}}$ is a p0-NominalPUSCH parameter based on the waveform m, and $P_{\text{O\_UE\_PUSCH,m}}$ is a p0-UE-PUSCH parameter based on the waveform m.

$$\Delta_{TF,m} = 10\log_{10}\left(\left(2^{BPREK_{s,m}} - 1\right) \cdot \beta_{offset}^{PUSCH}\right)$$, where $K_{s,m}$ is a deltaMCS-Enable parameter based on the waveform m. For explanations of other parameters, refer to the foregoing descriptions. Details are not described herein again.

In another example of this application, it is assumed that a deltaMCS-Enable parameter of the first-type power control parameter is related to a waveform and that other parameters of the first-type power control parameter and the second-type power control parameter are unrelated to the waveform. The UE sends data on a PUSCH by using a waveform m, and may calculate PUSCH transmit power by using a power control parameter based on the waveform m. A calculation formula is as follows:

$$P_{\text{PUSCHm}} = \min\left\{\begin{array}{l} P_{\text{available}}, \\ 10\log_{10}(M_{\text{PUSCH}}) + P_{\text{O\_PUSCH}} + \alpha \cdot PL + \Delta_{\text{TF,m}} + f \end{array}\right\}.$$

$$\Delta_{TF,m} = 10\log_{10}\left(\left(2^{BPRE \cdot K_{s,m}} - 1\right) \cdot \beta_{offset}^{PUSCH}\right)$$, where $K_{s,m}$ is a deltaMCS-Enable parameter based on the waveform m. For explanations of other parameters, refer to the foregoing descriptions. Details are not described herein again.

Optionally, the deltaMCS-Enable parameter based on the waveform m may be sent by the network device to the UE by using signaling, for example, by using RRC signaling or by using MAC signaling. Alternatively, the deltaMCS-Enable parameter based on the waveform m may be preset by the network device and the UE according to a protocol. For example, a value of $K_{s,m}$ is en0, indicating that power adjustment based on a modulation and coding scheme is not used. When a value of $K_{s,m}$ is en1, different values of en1 correspond to different waveforms, and a correspondence between a value of en1 and a waveform is defined in a protocol.

Optionally, an offset $\beta_{waveform}^{PUSCH}$ may be introduced as impact on the PUSCH transmit power. Each waveform may correspond to one offset $\beta_{waveform}^{PUSCH}$, and the offset may be sent by the network device to the UE by using signaling, for example, by using RRC signaling or by using MAC signaling. Alternatively, the offset may be preset by the network device and the UE according to a protocol. In this optional implementation, $\Delta_{TF}$ may be obtained by using one of the following formulas:

$$\Delta_{TF} = 10\log_{10}\left(\left(2^{BPRE \cdot K_s} - 1\right) \cdot \beta_{offset}^{PUSCH} \cdot \beta_{waveform}^{PUSCH}\right);$$

and

$$\Delta_{TF} = 10\log_{10}\left(\left(2^{BPRE \cdot K_s \cdot \beta_{waveform}^{PUSCH}} - 1\right) \cdot \beta_{offset}^{PUSCH}\right).$$

It is easily understood that $\Delta_{TF}$ based on the waveform m is the foregoing $\Delta_{TF,m}$. In this case, $\beta_{waveform}^{PUSCH}$ may be represented as $\beta_{waveform,\mathrm{m}}^{PUSCH}$.

According to the power control method provided in this embodiment, the network device configures, for the UE by using signaling, one or more first-type power control parameters related to a waveform used for data, so that when sending data by using different waveforms, the UE can calculate PUSCH transmit power by using power control parameters based on the used waveforms. This helps implement different PUSCH transmit power of data for which the different waveforms are used, and meet a performance requirement of the data for which the different waveforms are used.

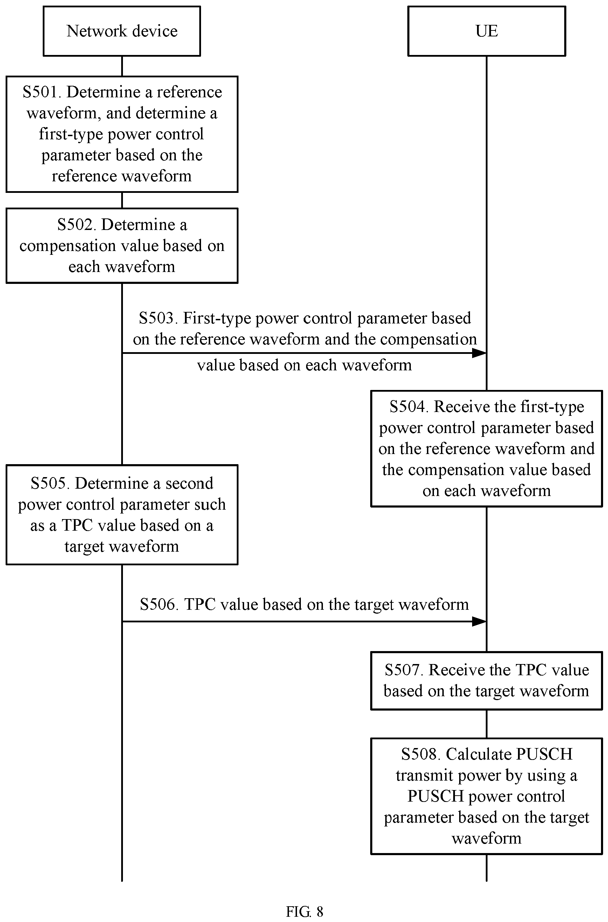

FIG. 8 is a schematic interaction diagram of a power control method according to this application. The method may include the following steps S501 to S508.

S501. A network device determines a reference waveform, and determines, based on the reference waveform, a first-type power control parameter based on the reference waveform.

A waveform used as the reference waveform is not limited in this application. In principle, any waveform may be used as the reference waveform. For example, the network device may use a DFT-s-OFDM waveform as the reference waveform.

S502. The network device determines a compensation value (which is referred to as a "compensation value based on each waveform") of PUSCH transmit power of UE when the UE sends data on each waveform.

For descriptions of each waveform, refer to the foregoing descriptions. Details are not described herein again.

S503. The network device sends the first-type power control parameter based on the reference waveform and the compensation value based on each waveform to the UE.

The network device may configure the first-type power control parameter based on the reference waveform and the compensation value based on each waveform for the UE in a semi-static manner, for example, sending the first-type power control parameter based on the reference waveform and the compensation value based on each waveform to the UE by using one or more pieces of RRC signaling, one or more pieces of MAC signaling, or the like. In the RRC signaling, the network device may indicate an association relationship between a compensation value and a waveform in an explicit manner.

S504. The UE receives the first-type power control parameter and the compensation value based on each waveform. After receiving the first-type power control parameter based on the reference waveform and the compensation value based on each waveform, the UE may store the first-type power control parameter based on the reference waveform and the compensation value based on each waveform.

S501 to S504 are described by using an example in which the network device sends the compensation value based on each waveform to the UE by using signaling. In an embodiment of this application, the network device and the UE may preset or predefine a compensation value based on a waveform according to a protocol. This can reduce signaling overheads. In this case, in the method shown in FIG. 8, the network device may not perform steps of determining and sending a compensation value based on a target waveform, and the UE may not perform steps of receiving and storing the compensation value based on the target waveform. Certainly, a compensation value or compensation values based on one or more waveforms may be alternatively preset or predefined according to a protocol. These compensation values may be set before delivery. Then, compensation values based on other waveforms are configured by using signaling, for example, by using RRC signaling or by using MAC signaling.

For S505 to S508, refer to S404 to S407, or refer to other implementations.

It may be understood that this embodiment is described by using an example in which both a compensation value and a second-type power control parameter are related to a waveform. During actual implementation, one of the compensation value and the second-type power control parameter may be related to a waveform, and the other is unrelated to the waveform. Specific examples are not listed one by one herein.

It is assumed that the compensation value is related to the used waveform and that the second-type power control parameter is unrelated to the used waveform. The UE may calculate PUSCH transmit power by using a power control parameter based on a waveform m, so as to send data on a PUSCH. A calculation formula is as follows:

$$P_{\mathrm{PUSCH,m}} = \min\left\{ \begin{array}{l} P_{\mathrm{available}}, \\ 10\log_{10}(M_{\mathrm{PUSC}}) + P_{\mathrm{0\_PUSC}} + \alpha \cdot PL + \Delta_{\mathit{WF},m} + \Delta_{\mathrm{TF}} + f \end{array} \right\}.$$

$\Delta_{WF,m}$ is a compensation value based on the waveform m. When the waveform m is the reference waveform, the compensation value is 0. When the waveform m is not the reference waveform, the compensation value may be configured by the network device or determined based on a compensation value set in a protocol. For explanations of other parameters, refer to the foregoing descriptions. Details are not described herein again.

According to the power control method provided in this embodiment, the network device configures the first-type power control parameter based on the waveform and the compensation value of transmit power based on each waveform for the UE by using signaling, so that when sending data by using different waveforms, the UE can calculate PUSCH transmit power by using power control parameters based on the waveforms. This helps implement different PUSCH transmit power of the data for which the different waveforms are used, and meet a performance requirement of the data for which the different waveforms are used.

It may be understood that features in any one of the foregoing plurality of embodiments may be recombined when there is no collision, to obtain a new embodiment. Details are not described in this application.

In any one of the foregoing provided embodiments, it is not mentioned how to set PUSCH transmit power of data with different service types when all data with a plurality of service types is transmitted on a PUSCH. There is no related description about the problem in the LTE system. In a possible implementation, available PUSCH transmit power is equally assigned to data with each service type. However, the following problem may be caused: An expected performance requirement of a service with a relatively high performance requirement may not be met. For example, when both a service in an eMBB scenario and a service in a URLLC scenario are transmitted, the available PUSCH transmit power is equally assigned to the two scenarios, and consequently an expected performance requirement of the URLLC service may not be met.

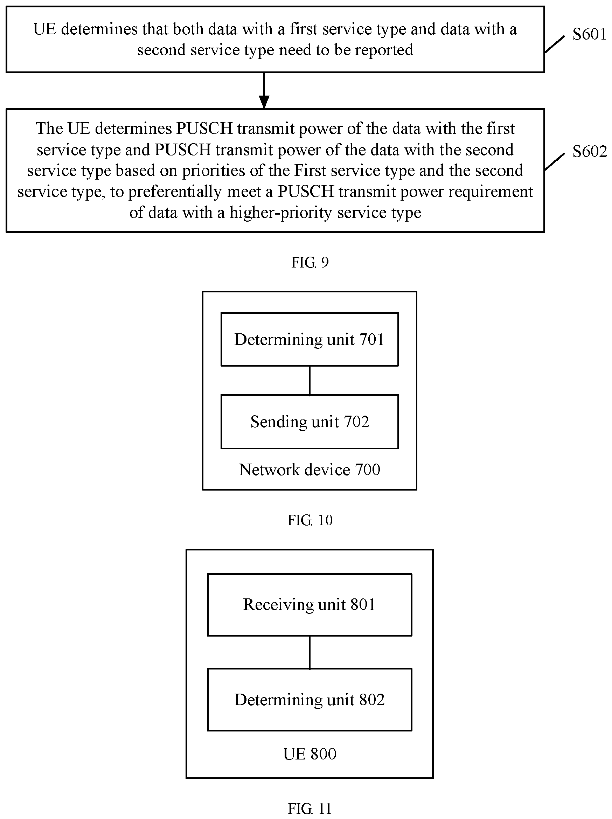

Based on this, this application provides another power control method. As shown in FIG. 9, the method may include the following steps S601 and S602:

S601. UE determines that both data with a first service type and data with a second service type need to be reported.

S602. The UE determines PUSCH transmit power of the data with the first service type and PUSCH transmit power of the data with the second service type based on priorities of the first service type and the second service type, to preferentially meet a PUSCH transmit power requirement of data with a higher-priority service type.

For related explanations of the service types, refer to the foregoing descriptions. Details are not described herein again. In this application, priorities of the service types may be set based on performance requirements of the service types. For example, a service type having a relatively high requirement for quality of service has a relatively high priority. For example, a priority of a URLLC service is higher than a priority of an eMBB service. Settings of priorities of different services are not limited in this application. For example, the priorities may be set by a network device, and then sent to the UE by using signaling, or may be preset by the network device and the UE according to a protocol or in another manner.

For example, a priority of a service type x is a first priority, a priority of a service type y is a second priority, and the first priority is higher than the second priority. PUSCH transmit power may be calculated based on the following formulas:

$$P_{\mathrm{PUSCHx}} = \min \left\{ \begin{array}{l} P_{\mathrm{available}}, \\ 10 \log_{10}(M_{\mathrm{PUSCHx}}) + P_{\mathrm{O\_PUSCH}} + \alpha \cdot PL + \Delta_{traffic x} + \Delta_{\mathrm{TF}} + f \end{array} \right\};$$

and

$$P_{\mathrm{PUSCHy}} = \min \left\{ \begin{array}{l} P_{\mathrm{available}} - P_{PUSCH,x}, \\ 10 \log_{10}(M_{\mathrm{PUSCHy}}) + P_{\mathrm{O\_PUSCH}} + \alpha \cdot PL + \Delta_{traffic y} + \Delta_{\mathrm{TF}} + f \end{array} \right\}.$$

$P_{\mathrm{available}}$ is available power of a PUSCH. $P_{\mathrm{PUSCH, x}}$ is PUSCH transmit power of data with the service type x. $P_{\mathrm{PUSCH,y}}$ is PUSCH transmit power of data with the service type y. For explanations of other parameters, refer to the foregoing descriptions. Details are not described herein again.

It may be learned from the foregoing formulas that available power of the data with the service type y may be obtained by subtracting the PUSCH transmit power of the data with the service type x from the available power of the PUSCH. In this embodiment, maximum available transmit power of data with different service types may be different.

According to the power control method provided in this embodiment, priorities are assigned to different service types, so that the available power of the PUSCH preferentially meets a PUSCH transmit power requirement of data with a higher-priority service type, thereby ensuring correct transmission of higher-priority data.

The solutions provided in the embodiments of this application are mainly described above from a perspective of interaction between network elements. It may be understood that the network elements are, for example, network devices or UEs. To implement the foregoing functions, the network elements include corresponding hardware structures and/or software modules performing the functions. A person of ordinary skill in the art should easily be aware that units and algorithms steps in the examples described in the embodiments disclosed in this specification may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In the embodiments of this application, functional module division may be performed on the network device or the UE based on the foregoing method examples. For example, the division of functional modules may be performed in correspondence to functions, or at least two functions may be integrated into one processing module. The integrated module may be implemented in a form of hardware, or may be implemented in a form of a software functional module. It should be noted that, in the embodiments of this application, module division is an example, and is merely logical function division. During actual implementation, other division manners may be used.

An example in which division of functional modules is performed in correspondence to functions is used below for description.

FIG. 10 is a schematic structural diagram of a network device 700 according to this application. The network device 700 may be configured to perform an action performed by the network device according to any one of the foregoing embodiments in FIG. 4 to FIG. 8. All related content in the steps of the foregoing method embodiments may be cited for describing functions of corresponding functional modules.

For example, the network device 700 may include a determining unit 701 and a sending unit 702. The determining unit 701 may be configured to determine an uplink channel power control parameter of UE, where different uplink channel power control parameters of the UE are used for transmitting different types of data. The sending unit 702 may be configured to send information indicating the determined uplink channel power control parameter.

Optionally, the sending unit 702 may be specifically configured to send the information for the determined uplink channel power control parameter by using RRC signaling or MAC signaling.

FIG. 11 is a schematic structural diagram of UE 800 according to this application. The UE 800 may be configured to perform an action performed by the UE according to any one of the foregoing embodiments in FIG. 4 to FIG. 8. All related content in the steps of the foregoing method embodiments may be cited for describing functions of corresponding functional modules.

For example, the UE 800 may include a receiving unit 801 and a determining unit 802. The receiving unit 801 may be configured to receive information indicating an uplink channel power control parameter of a physical uplink shared channel of the UE, where different uplink channel power control parameters of the UE are used for transmitting different types of data. The determining unit 802 may be configured to determine uplink channel transmit power of the UE based on the indicated uplink channel power control parameter.

Optionally, the different types of data include data for which different subcarrier spacings are used. The receiving unit 801 may be further configured to receive information that indicates a reference subcarrier spacing and that is sent by a network device.

Optionally, the receiving unit 801 may be specifically configured to receive, by using radio resource control RRC signaling, media access control MAC signaling, or downlink control information DCI, the information indicating the uplink channel power control parameter of the UE.

For content included in the uplink channel power control parameters for the different types of data, refer to the foregoing descriptions. Details are not described herein again.

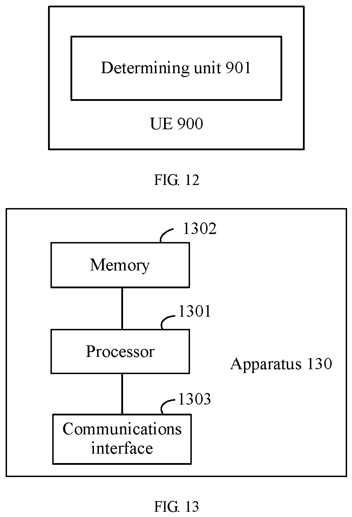

FIG. 12 is a schematic structural diagram of UE 900 according to this application. The UE 900 may be configured to perform an action performed by the UE according to any one of the foregoing embodiment in FIG. 9. All related content in the steps of the foregoing method embodiments may be cited for describing functions of corresponding functional modules.

For example, the UE 900 may include a determining unit 901, configured to: determine that both data with a first service type and data with a second service type need to be reported; and determine uplink channel transmit power of a physical uplink shared channel for the data with the first service type and uplink channel transmit power of the data with the second service type based on priorities of the first service type and the second service type, to preferentially meet an uplink channel transmit power requirement of data with a higher-priority service type.

In the embodiments of this application, all function division corresponding to the network device 700, the UE 800, and the UE 900 is presented in a form of functional modules, or the division is presented in a form of functional modules in an integration manner. The "modules" herein may be an application-specific integrated circuit (application-specific integrated circuit, ASIC), a processor that executes one or more software or firmware programs, a memory, an integrated logic circuit, and/or another device that can provide the foregoing functions, where the processor and the memory may be integrated together or independent of each other.

In a simple embodiment, a person skilled in the art may figure out that any one of the network device 700, the UE 800, and the UE 900 is implemented by a structure shown in FIG. 13.

As shown in FIG. 13, an apparatus 130 may include a processor 1301, a memory 1302, and a communications interface 1303. The memory 1302 is configured to store a computer executable instruction. When the apparatus 130 runs, the processor 1301 executes the computer executable instruction stored in the memory 1302, so that the apparatus 130 performs the power control method provided in the embodiments of this application. For a specific power control method, refer to related descriptions described above and in the accompanying drawings. Details are not described herein again. The communications interface 1303 may be a transceiver.

In an example of this application, in FIG. 10, the determining unit 701 may be implemented by the processor 1301, and the sending unit 702 may be implemented by the communications interface 1303.

In another example of this application, in FIG. 11, the receiving unit 801 may be implemented by the communications interface 1303, and the determining unit 802 may be implemented by the processor 1301.

In still another example of this application, in FIG. 12, the determining unit 901 may be implemented by the processor 1301.

The processor 1301 may be a field-programmable gate array (field-programmable gate array, FPGA), an application-specific integrated circuit (application specific integrated circuit, ASIC), a system on chip (system on chip, SoC), a central processing unit (central processing unit, CPU), a network processor (network processor, NP), a digital signal processor (digital signal processor, DSP), or a micro controller unit (micro controller unit, MCU), or may be a programmable logic device (programmable logic device, PLD) or another integrated chip.

An embodiment of this application further provides a storage medium. The storage medium may include the memory 1302.

Any apparatus provided in the embodiments of this application may be configured to perform the foregoing corresponding method. Therefore, for technical effects that can be achieved by the apparatus, refer to the foregoing method embodiments. Details are not described again in the embodiments of this application.

All or some of the foregoing embodiments may be implemented by using software, hardware, firmware, or any combination thereof. When a software program is used to implement the embodiments, all or some of the embodiments may be implemented in a form of a computer program product. The computer program product includes one or more computer instructions. When the computer program instructions are loaded and executed on a computer, all or some of the procedures or functions described in the embodiments of this application are generated. The computer may be a general-purpose computer, a special-purpose computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium that can be accessed by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Although this application is described with reference to the embodiments, in a process of implementing this application that claims protection, a person skilled in the art may understand and implement other variations of the disclosed embodiments by viewing the accompanying drawings, the disclosed content, and the accompanying claims. In the claims, "comprising" (comprising) does not exclude other components or other steps, and "a" or "one" does not exclude a case of "a plurality of". A single processor or other units may implement several functions enumerated in the claims. Some measures are recorded in dependent claims that are different from each other, but this does not mean that these measures cannot be combined to achieve a better effect.

Although this application is described with reference to specific features and the embodiments thereof, apparently, various modifications and combinations may be made to them without departing from the scope of this application.

## Claims

1. A method performed by a network device, the method comprising:

   • determining a reference service type, and determining, based on the reference service type (S 201), a value of a first type power control parameter of physical uplink shared channel, PUSCH, transmit power based on the reference service type, wherein the reference service type is:
   a service type used by the network device, the service type being one service type among a first service type and a further second service type, wherein services that require uplink transmission authorization are grouped into the first service type, and services that do not require uplink transmission authorization are grouped into the second service type;

• when determining that a user equipment, UE, sends data with each service type, determining, for each service type, a compensation value of the PUSCH transmit power of the UE based on a quality of service requirement of the service type, thereby determining compensation values, wherein each service type means all service types among the first and second service type (S 202);

• sending the value of the first-type power control parameter and the compensation values to the UE (S 203);

• determining a second-type power control parameter of the PUSCH transmit power based on a target service type, wherein the target service type is a service type, among the first and second service type, whose data currently need to be transmitted by the UE to the network device on the PUSCH, and the second-type power control parameter is a transmit power control, TPC, value (S 205);

• sending the second-type power control parameter to the UE (S 206);

• receiving the data on the PUSCH from the user equipment.

2. A method performed by a user equipment, the method comprising:

• receiving a value of a first-type power control parameter of physical uplink shared channel, PUSCH, transmit power and compensation values of the PUSCH transmit power from a network device (S 204),

wherein each compensation value among the received compensation values is a compensation value for a different service type among a first service type and a second service type, wherein services that require uplink transmission authorization are grouped into the first service type, and services that do not require uplink transmission authorization are grouped into the second service type;

• receiving a second-type power control parameter for the PUSCH transmit power from the network device, the second-type power control parameter being a transmit power control, TPC, value (S 207);

• calculating the PUSCH transmit power based on the value of the first-type power control parameter, a compensation value of a target service type among the received compensation values, and the second-type power control parameter (S 208), wherein the target service type is a service type whose data currently need to be transmitted by the user equipment to the network device on the PUSCH;

• sending the data on the PUSCH with the calculated PUSCH transmit power to the network device.

3. The method according to claim 1 or 2, wherein the first-type power control parameter comprises at least one of a cell reference open-loop power transmission parameter, a path loss compensation parameter, a user open-loop power offset parameter, a modulation and coding scheme MCS-based power adjustment parameter, and a parameter indicating whether a transmit power control, TPC, accumulation form is used.

4. A network device configured to perform any of the methods according to claim 1 and claim 3, when dependent on claim 1.

5. A user equipment configured to perform any of the methods according to claim 2 and claim 3, when dependent on claim 2.

6. A computer-readable storage medium comprising instructions, which, when executed by a computer of a network device, cause the network device to carry out the method according to any one of claim 1 and claim 3, when dependent on claim 1.

7. A computer-readable storage medium comprising instructions, which, when executed by a computer of a user equipment, cause the user equipment to carry out the method according to any one of claim 2 and claim 3, when dependent on claim 2.

8. A computer program product comprising instructions, which, when executed by a computer of a network device, cause the network device to carry out the method according to any one of claim 1 and claim 3, when dependent on claim 1.

9. A computer program product comprising instructions, which, when executed by a computer of a user equipment, cause the user equipment to carry out the method according to any one of claim 2 and claim 3, when dependent on claim 2.

**Patentansprüche**

1. Verfahren, das von einer Netzwerkvorrichtung ausgeführt wird, wobei das Verfahren umfasst:

   • Ermitteln eines Referenzdiensttyps, und Ermitteln, aufgrund des Referenzdiensttyps (S 201), eines Werts eines Leistungssteuerparameters eines ersten Typs einer Übertragungsleistung eines physischen gemeinsam genutzten Uplink-Kanals ("Physical Uplink Shared Channel", PUSCH), der auf dem Referenzdiensttyp beruht, wobei der Referenzdiensttyp ist:
   ein Diensttyp, der von der Netzwerkvorrichtung verwendet wird, wobei der Diensttyp ein Diensttyp aus einem ersten Diensttyp und einem weiteren zweiten Diensttyp ist, wobei Dienste, die eine Uplink-Übertragungsautorisierung benötigen in den ersten Diensttyp gruppiert sind, und wobei Dienste, die keine Uplink-Übertragungsautorisierung benötigen, in den zweiten Diensttyp gruppiert sind;
   • wenn ermittelt wird, dass ein Benutzergerät ("User Equipment", UE) Daten mit jedem Diensttyp sendet, Ermitteln, für jeden Diensttyp, eines Kompensationswerts der PUSCH-Übertragungsleistung des UE aufgrund einer Dienstgüteanforderung des Diensttyps, wodurch die Kompensationswerte ermittelt werden, wobei jeder Diensttyp alle Diensttypen aus dem ersten und dem zweiten Diensttyp bedeutet (S 202);
   • Senden des Werts des Leistungssteuerparameters des ersten Typs und der Kompensationswerte an das UE (S 203);
   • Ermitteln eines Leistungssteuerparameters eines zweiten Typs der PUSCH-Übertragungsleistung, der auf einem Zieldiensttyp beruht, wobei der Zieldiensttyp ein Diensttyp aus dem ersten und dem zweiten Diensttyp ist, dessen Daten aktuell durch das UE auf dem PUSCH zu der Netzwerkvorrichtung übertragen werden müssen, und wobei der Leistungssteuerparameter des zweiten Typs ein Übertragungsleistungssteuerwert ("Transmit Power Control value", TPC-Wert) ist (S 205);
   • Senden des Leistungssteuerparameters des zweiten Typs zu dem UE (S 206);
   • Empfangen der Daten auf dem PUSCH von dem Benutzergerät.

2. Verfahren, das von einem Benutzergerät ausgeführt wird, wobei das Verfahren umfasst:

   • Empfangen eines Werts eines Leistungssteuerparameters eines ersten Typs einer Übertragungsleistung eines physischen gemeinsam genutzten Uplink-Kanals ("Physical Uplink Shared Channel", PUSCH) und von Kompensationswerten der PUSCH-Übertragungsleistung von einer Netzwerkvorrichtung (S 204),
   wobei jeder Kompensationswert aus den empfangenen Kompensationswerten ein Kompensationswert für einen anderen Diensttyp aus einem ersten Diensttyp und einem zweiten Diensttyp ist, wobei Dienste, die eine Uplink-Übertragungsautorisierung benötigen in den ersten Diensttyp gruppiert sind, und wobei Dienste, die keine Uplink-Übertragungsautorisierung benötigen, in den zweiten Diensttyp gruppiert sind;
   • Empfangen eines Leistungssteuerparameters eines zweiten Typs für die PUSCH-Übertragungsleistung von der Netzwerkvorrichtung, wobei der Leistungssteuerparameter des zweiten Typs ein Übertragungsleistungssteuerwert ("Transmit Power Control value", TPC-Wert) ist (S 207);
   • Berechnen der PUSCH-Übertragungsleistung aufgrund des Werts des Leistungssteuerparameters des ersten Typs, eines Kompensationswerts eines Zieldiensttyps aus den empfangenen Kompensationswerten und des Leistungssteuerparameters des zweiten Typs (S 208), wobei der Zieldiensttyp ein Diensttyp ist, dessen Daten aktuell durch das Benutzergerät auf dem PUSCH zu der Netzwerkvorrichtung übertragen werden müssen;
   • Senden der Daten auf dem PUSCH mit der berechneten PUSCH-Übertragungsleistung zu der Netzwerkvorrichtung.

3. Verfahren nach Anspruch 1 oder 2, wobei der Leistungssteuerparameter des ersten Typs mindestens einen umfasst von: einem Leistungsübertragungsparameter einer offenen Zellenreferenzschleife, einem Pfadverlustkompensationsparameter, einem Leistungsoffsetparameter einer offenen Benutzerschleife, einem Modulations- und Codierungsschema basierten, MCS-basierten Leistungsanpassungsparameter und einem Parameter, der anzeigt, ob eine Akkumulationsform einer Übertragungsleistungsteuerung ("Transmit Power Control accumulation form", TPC-Akkumulationsform) verwendet wird.

4. Netzwerkvorrichtung, die konfiguriert ist zum Durchführen eines der Verfahren nach Anspruch 1 und Anspruch 3, wenn er von Anspruch 1 abhängig ist.

5. Benutzergerät, das konfiguriert ist zum Durchführen eines der Verfahren nach Anspruch 2 und Anspruch 3, wenn er von Anspruch 2 abhängig ist.

**6.** Computerlesbares Speichermedium, das Befehle umfasst, die, wenn sie von einem Computer einer Netzwerkvorrichtung ausgeführt werden, die Netzwerkvorrichtung veranlassen, das Verfahren nach einem von Anspruch 1 und Anspruch 3, wenn er von Anspruch 1 abhängig ist, auszuführen.

**7.** Computerlesbares Speichermedium, das Befehle umfasst, die, wenn sie von einem Computer eines Benutzergeräts ausgeführt werden, das Benutzergerät veranlassen, das Verfahren nach einem von Anspruch 2 und Anspruch 3, wenn er von Anspruch 2 abhängig ist, auszuführen.

**8.** Computerprogrammprodukt, das Befehle umfasst, die, wenn sie von einem Computer einer Netzwerkvorrichtung ausgeführt werden, die Netzwerkvorrichtung veranlassen, das Verfahren nach einem von Anspruch 1 und Anspruch 3, wenn er von Anspruch 1 abhängig ist, auszuführen.

**9.** Computerprogrammprodukt, das Befehle umfasst, die, wenn sie von einem Computer eines Benutzergeräts ausgeführt werden, das Benutzergerät veranlassen, das Verfahren nach einem von Anspruch 2 und Anspruch 3, wenn er von Anspruch 2 abhängig ist, auszuführen.


**Revendications**

**1.** Procédé exécuté par un dispositif de réseau, le procédé comprenant :

• la détermination d'un type de service de référence, et la détermination, sur la base du type de service de référence (S201), d'une valeur d'un paramètre de commande de puissance d'un premier type d'une puissance d'émission d'un canal partagé en liaison montante physique, PUSCH, sur la base du type de service de référence, dans lequel le type de service de référence est :
un type de service utilisé par le dispositif de réseau, le type de service étant un type de service parmi un premier type de service et un second type de service supplémentaire, dans lequel les services qui nécessitent une autorisation de transmission en liaison montante sont groupés dans le premier type de service, et des services qui ne nécessitent pas d'autorisation de transmission en liaison montante sont groupés dans le second type de service ;
• lors de la détermination qu'un équipement utilisateur, UE, envoie des données avec chaque type de service, déterminer, pour chaque type de service, une valeur de compensation de la puissance d'émission PUSCH de l'UE sur la base d'une exigence de qualité de service du type de service, ce qui permet de déterminer des valeurs de compensation, dans lequel chaque type de service signifie tous les types de service parmi le premier et le second type de service (S202) ;
• l'envoi de la valeur du paramètre de commande de puissance d'un premier type et des valeurs de compensation à l'UE (S203) ;
• la détermination d'un paramètre de commande de puissance d'un second type de la puissance d'émission PUSCH sur la base d'un type de service cible, dans lequel le type de service cible est un type de service, parmi le premier et le second type de service, dont les données doivent actuellement être transmises par l'UE au dispositif de réseau sur le PUSCH, et le paramètre de commande de puissance d'un second type est une valeur de commande de puissance d'émission, TPC (S205) ;
• l'envoi du paramètre de commande de puissance d'un second type à l'UE (S206) ;
• la réception des données sur le PUSCH provenant de l'équipement utilisateur.

**2.** Procédé exécuté par un équipement utilisateur, le procédé comprenant :

• la réception d'une valeur d'un paramètre de commande de puissance d'un premier type d'une puissance d'émission d'un canal partagé en liaison montante physique, PUSCH, et de valeurs de compensation de la puissance d'émission PUSCH provenant d'un dispositif de réseau (S204),
dans lequel chaque valeur de compensation parmi les valeurs de compensation reçues est une valeur de compensation pour un type de service différent parmi un premier type de service et un second type de service, dans lequel les services qui nécessitent une autorisation de transmission en liaison montante sont groupés dans le premier type de service, et des services qui ne nécessitent pas l'autorisation de transmission en liaison montante sont groupés dans le second type de service ;
• la réception d'un paramètre de commande de puissance d'un second type pour la puissance d'émission PUSCH provenant du dispositif de réseau, le paramètre de commande de puissance d'un second type étant une valeur de commande de puissance d'émission, TPC (S207) ;

• le calcul de la puissance d'émission PUSCH sur la base de la valeur du paramètre de commande de puissance du premier type, d'une valeur de compensation d'un type de service cible parmi les valeurs de compensation reçues, et du paramètre de commande de puissance d'un second type (S208), dans lequel le type de service cible est un type de service dont des données doivent actuellement être transmises par l'équipement utilisateur au dispositif de réseau sur le PUSCH ;

• l'envoi des données sur le PUSCH avec la puissance d'émission PUSCH calculée au dispositif de réseau.

3. Procédé selon la revendication 1 ou 2, dans lequel le paramètre de commande de puissance d'un premier type comprend au moins un d'un paramètre de transmission de puissance en boucle ouverte de référence de cellule, d'un paramètre de compensation de perte de trajet, d'un paramètre de décalage de puissance en boucle ouverte d'utilisateur, d'un paramètre de réglage de puissance basée sur MCS d'un schéma de codage, et d'un paramètre indiquant si une forme d'accumulation de commande de puissance d'émission, TPC, est utilisée.

4. Dispositif de réseau configuré pour exécuter l'un quelconque des procédés selon la revendication 1 et la revendication 3, lorsqu'elle dépend de la revendication 1.

5. Équipement utilisateur configuré pour exécuter l'un quelconque des procédés selon la revendication 2 et la revendication 3, lorsqu'elle dépend de la revendication 2.

6. Support de stockage lisible par ordinateur comprenant des instructions qui, lorsqu'elles sont exécutées par un ordinateur d'un dispositif de réseau, amènent le dispositif de réseau à mettre en œuvre le procédé selon l'une quelconque de la revendication 1 et de la revendication 3, lorsqu'elle dépend de la revendication 1.

7. Support de stockage lisible par ordinateur comprenant des instructions qui, lorsqu'elles sont exécutées par un ordinateur d'un équipement utilisateur, amènent l'équipement utilisateur à mettre en œuvre le procédé selon l'une quelconque de la revendication 2 et de la revendication 3, lorsqu'elle dépend de la revendication 2.

8. Produit de programme informatique comprenant des instructions qui, lorsqu'elles sont exécutées par un ordinateur d'un dispositif de réseau, amènent le dispositif de réseau à mettre en œuvre le procédé selon l'une quelconque de la revendication 1 et de la revendication 3, lorsqu'elle dépend de la revendication 1.

9. Produit de programme informatique comprenant des instructions qui, lorsqu'elles sont exécutées par un ordinateur d'un équipement utilisateur, amènent l'équipement utilisateur à mettre en œuvre le procédé selon l'une quelconque de la revendication 2 et de la revendication 3, lorsqu'elle dépend de la revendication 2.

FIG. 1

FIG. 2

200

110 — RF circuit

160

180 — Processor

Audio circuit

120

Memory

Power supply — 190

170

I/O subsystem

130 — Another input device

Sensor — 150

Display — 140

Display panel — 141

Touch panel — 142

FIG. 3

Network device

UE

S101. Determine a first-type power control parameter based on each service type

S102. First-type power control parameter based on each service type

S103. Receive the first-type power control parameter based on each service type

S104. Determine a second-type power control parameter such as a TPC value based on a target service type

S105. TPC value based on the target service type

S106. Receive the TPC value based on the target service type

S107. Calculate PUSCH transmit power by using a PUSCH power control parameter based on the target service type

FIG. 4

| Network device | | UE |
|---|---|---|

**S201.** Determine a reference service type, and determine a first-type power control parameter based on the reference service type

**S202.** Determine a compensation value based on each service type

**S203.** First-type power control parameter based on the reference service type and the compensation value based on each service type →

**S204.** Receive the first-type power control parameter based on the reference service type and the compensation value based on each service type

**S205.** Determine a second-type power control parameter such as a TPC value based on a target service type

**S206.** TPC value based on the target service type →

**S207.** Receive the TPC value based on the target service type

**S208.** Calculate PUSCH transmit power by using a PUSCH power control parameter based on the target service type

FIG. 5

```
┌─────────────────────────┐                    ┌─────────────────────────┐
│     Network device      │                    │           UE            │
└─────────────────────────┘                    └─────────────────────────┘
             │                                               │
┌─────────────────────────┐                                 │
│ S301. Determine a       │                                 │
│ reference subcarrier    │                                 │
│ spacing, and determine  │                                 │
│ a first-type power      │                                 │
│ control parameter based │                                 │
│ on the reference        │                                 │
│ subcarrier spacing      │                                 │
└─────────────────────────┘                                 │
             │                                               │
┌─────────────────────────┐                                 │
│ S302. Determine a       │                                 │
│ compensation value      │                                 │
│ based on each subcarrier│                                 │
│ spacing                 │                                 │
└─────────────────────────┘                                 │
             │                                               │
```

S303. First-type power control parameter based on the reference subcarrier spacing and the compensation value based on each subcarrier spacing

```
                                                ┌─────────────────────────┐
                                                │ S304. Receive the       │
                                                │ first-type power control│
                                                │ parameter based on the  │
                                                │ reference subcarrier    │
                                                │ spacing and the         │
                                                │ compensation value based│
                                                │ on each subcarrier      │
                                                │ spacing                 │
                                                └─────────────────────────┘
┌─────────────────────────┐                                 │
│ S305. Determine a       │                                 │
│ second power control    │                                 │
│ parameter such as a TPC │                                 │
│ value based on a target │                                 │
│ subcarrier spacing      │                                 │
└─────────────────────────┘                                 │
             │                                               │
```

S306. TPC value based on the target subcarrier spacing

```
                                                ┌─────────────────────────┐
                                                │ S307. Receive the TPC   │
                                                │ value based on the      │
                                                │ target subcarrier       │
                                                │ spacing                 │
                                                └─────────────────────────┘
                                                             │
                                                ┌─────────────────────────┐
                                                │ S308. Calculate PUSCH   │
                                                │ transmit power by using │
                                                │ a PUSCH power control   │
                                                │ parameter based on the  │
                                                │ target subcarrier       │
                                                │ spacing                 │
                                                └─────────────────────────┘
```

FIG. 6

```
┌─────────────────────────┐                           ┌─────────────────────────┐
│     Network device      │                           │           UE            │
└─────────────────────────┘                           └─────────────────────────┘
             │                                                      │
  ┌──────────┴──────────────┐                                       │
  │ S401. Determine a first-type │                                  │
  │ power control parameter based │                                 │
  │     on each waveform     │                                       │
  └──────────┬──────────────┘                                       │
             │   S402. First-type power control parameter based     │
             │─────────────────── on each waveform ────────────────▶│
             │                                                      │
             │                                           ┌──────────┴──────────┐
             │                                           │ S403. Receive the first-type │
  ┌──────────┴──────────────┐                            │  power control parameter │
  │ S404. Determine a second-type │                      │  based on each waveform  │
  │ power control parameter such  │                      └──────────┬──────────┘
  │   as a TPC value based on a   │                                 │
  │      target waveform          │                                 │
  └──────────┬──────────────┘                                       │
             │   S405. TPC value based on the target waveform        │
             │─────────────────────────────────────────────────────▶│
             │                                                      │
             │                                           ┌──────────┴──────────┐
             │                                           │ S406. Receive the TPC value │
             │                                           │ based on the target waveform │
             │                                           └──────────┬──────────┘
             │                                                      │
             │                                           ┌──────────┴──────────┐
             │                                           │  S407. Calculate PUSCH  │
             │                                           │  transmit power by using a │
             │                                           │   PUSCH power control   │
             │                                           │ parameter based on the target │
             │                                           │        waveform         │
             │                                           └──────────┬──────────┘
             │                                                      │
```

FIG. 7

| Network device | | UE |
|---|---|---|

S501. Determine a reference waveform, and determine a first-type power control parameter based on the reference waveform

S502. Determine a compensation value based on each waveform

S503. First-type power control parameter based on the reference waveform and the compensation value based on each waveform →

S504. Receive the first-type power control parameter based on the reference waveform and the compensation value based on each waveform

S505. Determine a second power control parameter such as a TPC value based on a target waveform

S506. TPC value based on the target waveform →

S507. Receive the TPC value based on the target waveform

S508. Calculate PUSCH transmit power by using a PUSCH power control parameter based on the target waveform

FIG. 8

UE determines that both data with a first service type and data with a second service type need to be reported

S601

The UE determines PUSCH transmit power of the data with the first service type and PUSCH transmit power of the data with the second service type based on priorities of the First service type and the second service type, to preferentially meet a PUSCH transmit power requirement of data with a higher-priority service type

S602

FIG. 9

Determining unit 701

Sending unit 702

Network device 700

FIG. 10

Receiving unit 801

Determining unit 802

UE 800

FIG. 11

Determining unit 901

UE 900

FIG. 12

1302

Memory

1301

Processor

Apparatus 130

1303

Communications interface

FIG. 13

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *3GPP Draft; R1-1705437, Spokane, Washington, USA,* 02 April 2017